# EUROPÄISCHE PATENTSCHRIFT

(11) **EP 3 292 949 B1**
(45) Veröffentlichungstag und Bekanntmachung des Hinweises auf die Patenterteilung: **21.11.2018**
(21) Anmeldenummer: 17184650.4
(22) Anmeldetag: 03.08.2017
(51) Int. Cl.: B23Q 1/03, B23Q 7/03, B23Q 1/26, B25B 11/00, B21D 43/28, B21D 43/18, B23Q 3/02

(54) **VERFAHREN ZUM GEGENSEITIGEN POSITIONIEREN VON LAGERUNGSEINHEITEN EINER WERKSTÜCKLAGERUNG, WERKSTÜCKLAGERUNG, WERKZEUGMASCHINE MIT EINER WERKSTÜCKLAGERUNG UND STEUERUNGSPROGRAMM**
METHOD FOR MUTUAL POSITIONING OF STORAGE UNITS OF A WORKPIECE STORAGE, WORKPIECE STORAGE, MACHINE TOOL WITH A WORKPIECE STORAGE AND CONTROL PROGRAM
PROCÉDÉ DE POSITIONNEMENT RÉCIPROQUE DES UNITÉS DE RANGEMENT D'UN RANGEMENT DE PIÈCES À USINER, RANGEMENT DE PIÈCES À USINER, MACHINE-OUTIL POURVUE DE RANGEMENT DE PIÈCES À USINER ET PROGRAMME DE COMMANDE

(30) Priorität: 15.08.2016 DE 102016215137
(43) Veröffentlichungstag der Anmeldung: 14.03.2018
(73) Patentinhaber: Trumpf Werkzeugmaschinen GmbH + Co. KG, 71254 Ditzingen (DE)
(72) Erfinder: OTTNAD, Jens, Dr., 76199 Karlsruhe (DE); MATHIAS, Harald, 74357 Bönnigheim (DE); LUTZ, Kevin, 71034 Böblingen (DE); KÖPP, Frederick, 70825 Münchingen (DE); GROß, Stefan, 71720 Oberstenfeld (DE); HELLER, Andreas, 71254 Ditzingen (DE)
(74) Vertreter: Kohler Schmid Möbus Patentanwälte

(56) Entgegenhaltungen:
- EP-A1- 2 241 400
- DE-A1- 10 109 212
- DE-A1- 10 331 338
- JP-A- 2011 173 196

## Beschreibung

Die Erfindung betrifft ein Verfahren zum gegenseitigen Positionieren von Lagerungseinheiten einer Werkstücklagerung an einer Werkzeugmaschine zum Bearbeiten insbesondere plattenartiger Werkstücke, wobei die Lagerungseinheiten ausgehend von einer gegenseitigen Ist-Position, bei welcher jede der Lagerungseinheiten längs einer gemeinsamen Zustellbahn in einer individuellen Ist-Position angeordnet ist, in eine gegenseitige Soll-Position zugestellt werden, indem die folgenden Verfahrensschritte ausgeführt werden:
(a) für die Lagerungseinheiten wird jeweils eine der gegenseitigen Soll-Position der Lagerungseinheiten zugeordnete und der individuellen Ist-Position derselben Lagerungseinheit längs der gemeinsamen Zustellbahn unmittelbar benachbarte individuelle Soll-Position längs der gemeinsamen Zustellbahn bestimmt,
(b) es werden die Abstände, welche die in den individuellen Ist-Positionen angeordneten Lagerungseinheiten längs der gemeinsamen Zustellbahn von der jeweiligen individuellen Soll-Position aufweisen, bestimmt,
(c) diejenige Lagerungseinheit, die in der individuellen Ist-Position längs der gemeinsamen Zustellbahn den kleinsten Abstand von ihrer individuellen Soll-Position aufweist, wird als ausgewählte Lagerungseinheit definiert,
(d) die ausgewählte Lagerungseinheit wird, angebunden an ein gemeinsames Antriebsmittel, längs der gemeinsamen Zustellbahn in einer Zustellrichtung bewegt und dadurch aus der individuellen Ist-Position in die individuelle Soll-Position zugestellt,
(e) die in die individuelle Soll-Position zugestellte ausgewählte Lagerungseinheit wird von dem gemeinsamen Antriebsmittel entkoppelt,
(f) zusätzlich zu der ausgewählten Lagerungseinheit vorhandene weitere Lagerungseinheiten werden gemeinschaftlich mit der ausgewählten Lagerungseinheit, angebunden an das gemeinsame Antriebsmittel, in der Zustellrichtung zugestellt, bis die ausgewählte Lagerungseinheit in der individuellen Soll-Position angeordnet ist und damit verbunden die weiteren Lagerungseinheiten in einer individuellen Zwischenposition angeordnet sind,
(g) diejenige der weiteren Lagerungseinheiten wird als nächste ausgewählte Lagerungseinheit definiert, die in der individuellen Zwischenposition den kleinsten Abstand von ihrer individuellen Soll-Position aufweist,
(h) die nächste ausgewählte Lagerungseinheit wird, angebunden an das gemeinsame Antriebsmittel, in der Zustellrichtung bewegt und dadurch aus der individuellen Zwischenposition in die individuelle Soll-Position zugestellt, sobald die ausgewählte Lagerungseinheit in der individuellen Soll-Position angeordnet und von dem gemeinsamen Antriebsmittel entkoppelt ist,
(i) die in die individuelle Sollposition zugestellte nächste ausgewählte Lagerungseinheit wird von dem gemeinsamen Antriebsmittel entkoppelt,
(j) zusätzlich zu der nächsten ausgewählten Lagerungseinheit vorhandene weitere Lagerungseinheiten werden gemeinschaftlich mit der nächsten ausgewählten Lagerungseinheit, angebunden an das gemeinsame Antriebsmittel, in der Zustellrichtung zugestellt, bis die nächste ausgewählte Lagerungseinheit in der individuellen Soll-Position angeordnet ist und damit verbunden die weiteren Lagerungseinheiten in einer nächsten individuellen Zwischenposition angeordnet sind,
(k) die Verfahrensschritte (g) bis (j) werden erforderlichenfalls so oft wiederholt, bis sämtliche weitere Lagerungseinheiten in der Zustellrichtung in die individuelle Soll-Position zugestellt sind,

Die Erfindung betrifft des Weiteren eine Werkstücklagerung mit Lagerungseinheiten, die nach dem vorstehenden Verfahren relativ zueinander positionierbar sind gemäß dem Oberbegriff des Anspruchs 5, eine mit einer derartigen Werkstücklagerung versehene Werkzeugmaschine sowie ein Steuerungsprogramm zum Betreiben einer Werkstücklagerung der genannten Art.

Eine Werkstücklagerung der vorgenannten Art kann nach dem angegebenen Verfahren flexibel an unterschiedliche Anwendungsfälle, beispielsweise an wechselnde Werkstückgeometrien, angepasst werden. In Abhängigkeit von den Erfordernissen des jeweiligen Anwendungsfalls werden die Lagerungseinheiten der Werkstücklagerung unterschiedlich zueinander positioniert. Auf diese Art und Weise wird dafür gesorgt, dass die betreffenden Bereiche eines Werkstücks in der erforderlichen Art und Weise gelagert sind. Dabei können die Lagerungseinheiten der Werkstücklagerung das betreffende Werkstück insbesondere unterfangen aber auch zur Abstützung des Werkstücks an dessen Oberseite dienen. Gattungsgemäßer Stand der Technik ist offenbart in DE 103 31 338 A1. Diese Druckschrift betrifft ein automatisches Positioniersystem, das eine Basiskonstruktion, an der Basiskonstruktion montierte Linearführungen sowie Balkensysteme umfasst, die sich in Querrichtung der Linearführungen erstrecken und die mittels eines motorisch angetriebenen Zahnriemens längs der Linearführungen bewegt werden können. Jedes der Balkensysteme führt seinerseits eine Mehrzahl von Befestigungselementen, die beispielsweise als Vakuumsauger ausgebildet sind. Der gegenseitige Abstand der Balkensysteme längs der Linearführungen ist variabel. Sind zur Veränderung der gegenseitigen Positionierung der Balkensysteme mehrere Balkensysteme längs der Linearführungen umzusetzen, so wird als erstes Balkensystem dasjenige Balkensystem aus seiner Ausgangsposition in eine zuvor definierte Zielposition bewegt, dessen Ausgangsposition am nächsten an der Zielposition liegt. Der Transfer des ersten Balkensystems erfolgt mittels des motorisch angetriebenen Zahnriemens, an welchen dabei neben dem ersten Balkensystem auch die übrigen Balkensysteme des Positioniersystems angebunden sind. Hat das erste Balkensystem seine Zielposition erreicht, so wird es von dem Zahnriemen entkoppelt, während die übrigen Balkensysteme an den Zahnriemen angebunden bleiben. Nach dem Abkoppeln des ersten Balkensystems verfährt der Zahnriemen mit den daran angebundenen Balkensystemen um den nächsten vorgegebenen Weg, bis das nächste Balkensystem in seiner Zielposition angeordnet ist. Nachdem das nächste Balkensystem von dem Zahnriemen abgekoppelt ist, wiederholen sich die beschriebenen Vorgänge, bis alle zu positionierenden Balkensysteme ihre Zielposition erreicht haben.

Die Aufgabe der vorliegenden Erfindung besteht darin, auch für komplexe Anwendungsfälle eine Möglichkeit bereitzustellen, die gegenseitige Positionierung von Lagerungseinheiten einer Werkstücklagerung an einer Werkzeugmaschine zeitlich optimiert zu verändern.

Erfindungsgemäß gelöst wird diese Aufgabe durch das Verfahren gemäß Patentanspruch 1, durch die Werkstücklagerung gemäß Patentanspruch 5, durch die Werkzeugmaschine gemäß Patentanspruch 10 und durch das Steuerungsprogramm nach Patentanspruch 11.

Das erfindungsgemäße Verfahren gemäß Patentanspruch 1 ist gekennzeichnet durch die folgenden Verfahrensschritte:
(1) die Zustellrichtungen, in welchen die Lagerungseinheiten längs der gemeinsamen Zustellbahn aus der jeweiligen individuellen Ist-Position in die jeweilige individuelle Soll-Position zuzustellen sind, werden bestimmt und die Zustellrichtung der ausgewählten Lagerungseinheit wird als ausgewählte Zustellrichtung definiert,
(2) weitere Lagerungseinheiten, welche zum Zustellen aus der individuellen Ist-Position in die individuelle Soll-Position ebenfalls in der ausgewählten Zustellrichtung zu bewegen sind, werden gegebenenfalls als gleichläufige Lagerungseinheiten definiert,
(3) weitere Lagerungseinheiten, welche zum Zustellen aus der individuellen Ist-Position in die individuelle Soll-Position entgegen der ausgewählten Zustellrichtung zu bewegen sind, werden gegebenenfalls als gegenläufige Lagerungseinheiten definiert,
(4) die gleichläufigen Lagerungseinheiten werden gemeinschaftlich mit der ausgewählten Lagerungseinheit, angebunden an das gemeinsame Antriebsmittel, in der ausgewählten Zustellrichtung zugestellt, bis die ausgewählte Lagerungseinheit in der individuellen Soll-Position angeordnet ist und damit verbunden die gleichläufigen Lagerungseinheiten in einer individuellen Zwischenposition angeordnet sind,
(5) diejenige der gleichläufigen Lagerungseinheiten, die in der individuellen Zwischenposition in der ausgewählten Zustellrichtung den kleinsten Abstand von ihrer individuellen Soll-Position aufweist, wird als ausgewählte gleichläufige Lagerungseinheit definiert,
(6) die ausgewählte gleichläufige Lagerungseinheit wird, angebunden an das gemeinsame Antriebsmittel, in der ausgewählten Zustellrichtung aus der individuellen Zwischenposition in die individuelle Soll-Position zugestellt, sobald die ausgewählte Lagerungseinheit in die individuelle Soll-Position zugestellt und von dem gemeinsamen Antriebsmittel entkoppelt ist,
(7) die in die individuelle Soll-Position zugestellte ausgewählte gleichläufige Lagerungseinheit wird von dem gemeinsamen Antriebsmittel entkoppelt,
(8) zusätzlich zu der ausgewählten gleichläufigen Lagerungseinheit vorhandene weitere gleichläufige Lagerungseinheiten werden gegebenenfalls gemeinschaftlich mit der ausgewählten gleichläufigen Lagerungseinheit, angebunden an das gemeinsame Antriebsmittel, in der ausgewählten Zustellrichtung zugestellt, bis die ausgewählte gleichläufige Lagerungseinheit in der individuellen Soll-Position angeordnet ist und damit verbunden die weiteren gleichläufigen Lagerungseinheiten in einer nächsten individuellen Zwischenposition angeordnet sind,
(9) die Verfahrensschritte (5) bis (8) werden erforderlichenfalls so oft wiederholt, bis sämtliche weitere gleichläufige Lagerungseinheiten in der ausgewählten Zustellrichtung in die individuelle Soll-Position zugestellt sind,
(10) die gegenläufigen Lagerungseinheiten werden, von dem gemeinsamen Antriebsmittel entkoppelt, in der individuellen Ist-Position belassen, bis die ausgewählte Lagerungseinheit und gegebenenfalls die gleichläufigen Lagerungseinheiten in die Sollposition zugestellt und von dem gemeinsamen Antriebsmittel entkoppelt sind,
(11) diejenige der gegenläufigen Lagerungseinheiten, die in der individuellen Ist-Position entgegen der ausgewählten Zustellrichtung den kleinsten Abstand von ihrer individuellen Soll-Position aufweist, wird als ausgewählte gegenläufige Lagerungseinheit definiert,
(12) die ausgewählte gegenläufige Lagerungseinheit wird, angebunden an das gemeinsame Antriebsmittel, entgegen der ausgewählten Zustellrichtung aus der individuellen Ist-Position in die individuelle Soll-Position zugestellt, sobald die ausgewählte Lagerungseinheit und gegebenenfalls die gleichläufigen Lagerungseinheiten in die individuelle Soll-Position zugestellt und von dem gemeinsamen Antriebsmittel entkoppelt ist beziehungsweise sind,
(13) die in die individuelle Soll-Position zugestellte ausgewählte gegenläufige Lagerungseinheit wird von dem gemeinsamen Antriebsmittel entkoppelt,
(14) zusätzlich zu der ausgewählten gegenläufigen Lagerungseinheit vorhandene weitere gegenläufige Lagerungseinheiten werden gemeinschaftlich mit der ausgewählten gegenläufigen Lagerungseinheit, angebunden an das gemeinsame Antriebsmittel, entgegen der ausgewählten Zustellrichtung zugestellt, bis die ausgewählte gegenläufige Lagerungseinheit in der individuellen Soll-Position angeordnet ist und damit verbunden die weiteren gegenläufigen Lagerungseinheiten in einer individuellen Zwischenposition angeordnet sind,
(15) die Verfahrensschritte (10) bis (14) werden erforderlichenfalls so oft wiederholt, bis sämtliche weitere gegenläufige Lagerungseinheiten entgegen der ausgewählten Zustellrichtung in die individuelle Soll-Position zugestellt sind.

Im Rahmen des erfindungsgemäßen Verfahrens wird die Umpositionierung von Lagerungseinheiten sowohl abstands- als auch richtungsabhängig gesteuert.

Zur Neupositionierung wird als erste diejenige Lagerungseinheit ausgewählt, die längs der gemeinsamen Zustellbahn der Lagerungseinheiten auf dem kürzesten Weg von der individuellen Ist-Position in die individuelle Soll-Position bewegt werden kann.

Zusätzlich zu den längs der gemeinsamen Zustellbahn zwischen den individuellen Ist-Positionen und den individuellen Soll-Positionen der Lagerungseinheiten bestehenden Abständen werden die Richtungen bestimmt, in welchen die Lagerungseinheiten zur Überführung von der jeweiligen individuellen Ist-Position in die jeweilige individuelle Soll-Position zuzustellen sind. Die Zustellrichtung, in welcher die ausgewählte Lagerungseinheit zuzustellen ist, wird als ausgewählte Zustellrichtung definiert.

In der ausgewählten Zustellrichtung werden beim Zustellen einer ausgewählten Lagerungseinheit gegebenenfalls diejenigen weiteren Lagerungseinheiten mitgenommen, die zur Überführung aus der individuellen Ist-Position in die individuelle Soll-Position gleichgerichtet mit der ausgewählten Lagerungseinheit zu bewegen sind (gleichläufige Lagerungseinheiten). Die gleichläufigen Lagerungseinheiten werden zusammen mit der ausgewählten Lagerungseinheit an das gemeinsame Antriebsmittel der Lagerungseinheiten angebunden. Sobald die ausgewählte Lagerungseinheit die individuelle Soll-Position erreicht hat, wird die ausgewählte Lagerungseinheit von dem gemeinsamen Antriebsmittel entkoppelt. Die gleichläufigen Lagerungseinheiten befinden sich nun jeweils in einer individuellen Zwischenposition.

Diejenigen weiteren Lagerungseinheiten, die zur Überführung aus der individuellen Ist-Position in die individuelle Soll-Position entgegen der ausgewählten Zustellrichtung zu bewegen sind (gegenläufige Lagerungseinheiten), vollziehen gegebenenfalls die Zustellbewegung der ausgewählten Lagerungseinheit und etwaiger, mit der ausgewählten Lagerungseinheit gleichläufiger Lagerungseinheiten nicht mit. Dementsprechend werden die gegenläufigen Lagerungselemente bei dem Transfer der ausgewählten Lagerungseinheit und etwaiger gleichläufiger Lagerungseinheiten zunächst in der vor dem Transfer eingenommenen Position belassen.

Ist die ausgewählte Lagerungseinheit in die individuelle Soll-Position zugestellt, wird ausgehend von den Positionen, welche die noch nicht in die individuelle Soll-Position überführten Lagerungseinheiten dann längs der gemeinsamen Zustellbahn einnehmen, nach dem "Kriterium des kürzesten Weges" die nächste Lagerungseinheit definiert, die in die individuelle Soll-Position zu bewegen ist.

Sind gleichläufige Lagerungseinheiten vorhanden, so werden diese bei der Bewegung der ausgewählten Lagerungseinheit in die individuelle Soll-Position in Zwischenpositionen bewegt und nach dem Entkoppeln der ausgewählten Lagerungseinheit von dem gemeinsamen Antriebsmittel in der nach dem "Kriterium des kürzesten Weges" festgelegten Reihenfolge nacheinander in der ausgewählten Zustellrichtung in die individuelle Soll-Position zugestellt. Ist die individuelle Soll-Position erreicht, wird die betreffende gleichläufige Lagerungseinheit von dem gemeinsamen Antriebsmittel entkoppelt.

Gegenläufige Lagerungseinheiten werden gegebenenfalls aus der individuellen Ist-Position, in welcher sie sich auch noch nach dem Überführen der ausgewählten Lagerungseinheit und etwaiger gleichläufiger Lagerungseinheiten in die individuelle Soll-Position befinden, in einer nach dem "Kriterium des kürzesten Weges" definierten Reihenfolge entgegen der ausgewählten Zustellrichtung in die jeweilige individuelle Soll-Position zugestellt. Sind mehrere gegenläufige Lagerungseinheiten in die individuelle Soll-Position zuzustellen, so werden diese gemeinschaftlich, angebunden an das gemeinsame Antriebsmittel, entgegen der ausgewählten Zustellrichtung bewegt. Hat die erste der gegenläufigen Lagerungseinheiten längs der gemeinsamen Zustellbahn die individuelle Soll-Position erreicht, so wird sie zunächst von dem gemeinsamen Antriebsmittel entkoppelt, ehe das gemeinsame Antriebsmittel mit der oder den weiterhin daran angebundenen und nunmehr in einer individuellen Zwischenposition angeordneten gegenläufigen Lagerungseinheiten seine Zustellbewegung entgegen der ausgewählten Zustellrichtung fortsetzt.

Zur Realisierung der Umpositionierung der Lagerungseinheiten dienen an der erfindungsgemäßen Werkstücklagerung gemäß Anspruch 5 und an der erfindungsgemäßen Werkzeugmaschine gemäß Anspruch 10 ein das gemeinsame Antriebsmittel der Lagerungseinheiten umfassender motorischer Zustellantrieb sowie eine zur Anbindung der Lagerungseinheiten an das gemeinsame Antriebsmittel und zum Entkoppeln der Lagerungseinheiten von dem gemeinsamen Antriebsmittel vorgesehene Kopplungsvorrichtung. Sowohl der Zustellantrieb als auch die Kopplungsvorrichtung werden von einer vorzugsweise numerischen Steuerungsvorrichtung zur Durchführung des erfindungsgemäßen Verfahrens gesteuert. Dabei wird das erfindungsgemäße Steuerungsprogramm gemäß Anspruch 11 ausgeführt, das entsprechende Steuerbefehle umfasst.

Das erfindungsgemäße Verfahren und die erfindungsgemäßen Vorrichtungen ermöglichen es insbesondere, die besonders zeitintensiven Anbindungs- und Entkopplungsvorgänge zum Anbinden der Lagerungseinheiten an das gemeinsame Antriebsmittel beziehungsweise zum Entkoppeln der Lagerungseinheiten von dem gemeinsamen Antriebsmittel auf ein Minimum zu reduzieren. Kollisionen zwischen den Lagerungseinheiten im Laufe der Umpositionierung sind ausgeschlossen.

Als gemeinsames Antriebsmittel, das vorzugsweise mittels eines Elektromotors bewegt wird, kommt beispielsweise ein Antriebsriemen oder eine Antriebskette in Frage. Als Kopplungsvorrichtung ist eine elektromotorische Vorrichtung ebenso denkbar wie eine pneumatische oder eine hydraulische Vorrichtung.

Besondere Ausführungsarten der Erfindung nach den unabhängigen Patentansprüchen 1, 5 und 10 ergeben sich aus den abhängigen Patentansprüchen 2 bis 4 und 6 bis 9.

Zur Gewährleistung definierter Verhältnisse bei der Umpositionierung der Lagerungseinheiten ist in bevorzugter Ausgestaltung der Erfindung vorgesehen, dass die Lagerungseinheiten mittels einer entsprechenden Führungsvorrichtung längs der gemeinsamen Zustellbahn geführt werden (Patentansprüche 2, 6).

Um die Lagerungseinheiten an das gemeinsame Antriebsmittel anzubinden und von dem gemeinsamen Antriebsmittel zu entkoppeln, ist in weiterer vorteilhafter Ausgestaltung der Erfindung als Kopplungsvorrichtung eine Klemmvorrichtung vorgesehen, die mittels der Steuerungsvorrichtung der erfindungsgemäßen Werkstücklagerung in einen klemmenden Zustand und in einen Freigabezustand geschaltet werden kann (Patentansprüche 3, 7).

Zur Sicherung der Lagerungseinheiten in der jeweiligen individuellen Ist-Position und/oder in der jeweiligen individuellen Soll-Position und/oder in der jeweiligen individuellen Zwischenposition dient in bevorzugter Ausgestaltung der Erfindung eine Arretierungsvorrichtung, die wahlweise in einen Arretierungszustand oder in einen Lösezustand geschaltet werden kann. Auch als Arretierungsvorrichtung wird erfindungsgemäß eine schaltbare Klemmvorrichtung bevorzugt (Patentansprüche 4, 8).

Sind die Lagerungseinheiten an einer Führungsvorrichtung angeordnet, so besteht in weiterer vorteilhafter Ausgestaltung der Erfindung die Möglichkeit, die Lagerungseinheiten in der individuellen Ist-Position und/oder in der individuellen Soll-Position und/oder in der individuellen Zwischenposition an der Führungsvorrichtung lösbar zu arretieren, insbesondere lösbar zu klemmen (Patentanspruch 9).

Nachfolgend wird die Erfindung anhand beispielhafter schematischer Darstellungen näher erläutert. Es zeigen:
- Figur 1: drei Lagerungseinheiten einer Werkstücklagerung in einer ersten gegenseitigen Ist-Position (Teildarstellung (1)) sowie in einer ersten gegenseitigen Soll-Position (Teildarstellung (2)),
- Figuren 2a bis 2g: Darstellungen zur Veranschaulichung der Abläufe zum Überführen der Lagerungseinheiten gemäß Figur 1 aus der gegenseitigen Ist-Position in die gegenseitige Soll-Position,
- Figur 3: die Lagerungseinheiten gemäß den Figuren 1 bis 2g in einer zweiten gegenseitigen Ist-Position (Teildarstellung (1)) sowie in einer zweiten gegenseitigen Soll-Position (Teildarstellung (2)),
- Figuren 4a bis 4h: Darstellungen zur Veranschaulichung der Abläufe zum Überführen der Lagerungseinheiten gemäß Figur 3 aus der gegenseitigen Ist-Position in die gegenseitige Soll-Position und
- Figur 5: eine Werkzeugmaschine mit einer Werkstücklagerung gemäß den Figuren 1 bis 4h.

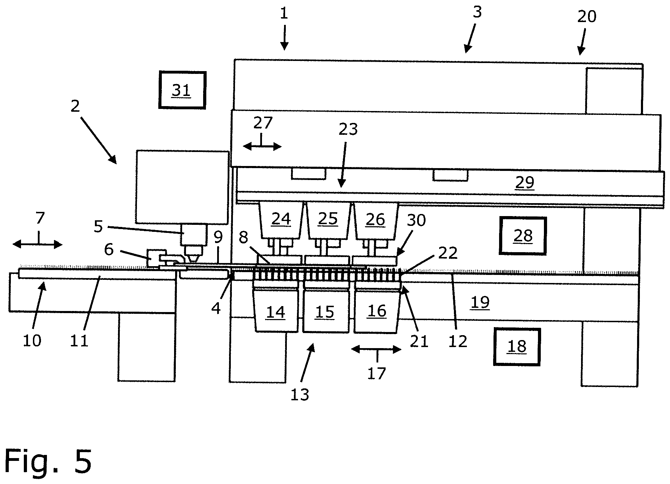

Gemäß Figur 5 umfasst eine Werkzeugmaschine 1 eine Bearbeitungsstation 2 sowie eine Entladestation 3.

Die Werkzeugmaschine 1 dient zum trennenden Bearbeiten von plattenartigen Werkstücken in Form von Blechen 4. Für die trennende Blechbearbeitung ist an der Bearbeitungsstation 2 ein Laserschneidkopf 5 vorgesehen, der relativ zu dem Blech 4 senkrecht zu der Zeichenebene von Figur 5 verfahren kann. Außerdem ist das Blech 4 lösbar an einer Werkstückhalterung 6 fixiert, die ihrerseits in Richtung eines Doppelpfeils 7 beweglich ist. Aufgrund der Beweglichkeit der Werkstückhalterung 6 und aufgrund der eigenen Verfahrbarkeit senkrecht zu der Zeichenebene von Figur 5 ist für den Laserschneidkopf 5 in einer horizontalen Bearbeitungsebene jede Stelle des Blechs 4 zur trennenden Bearbeitung erreichbar.

In dem dargestellten Beispielsfall hat der Laserschneidkopf 5 aus dem Blech 4 ein Fertigteil 8 ausgetrennt und dabei zusätzlich ein das Fertigteil 8 umschließendes Restgitter 9 erzeugt. Bei der Fertigstellung des Trennschnitts zwischen dem Fertigteil 8 und dem Restgitter 9 waren die Werkstückhalterung 6 und das Blech 4 bzw. das Fertigteil 8 und das an der Werkstückhalterung 6 lösbar fixierte Restgitter 9 gegenüber der in Figur 5 dargestellten Position nach links versetzt. Aufgrund einer in der Abbildung nach rechts gerichteten Verfahrbewegung der Werkstückhalterung 6 mit dem Restgitter 9 und dem Fertigteil 8 hat sich dann die in Figur 5 veranschaulichte Betriebssituation ergeben.

Bei der Verfahrbewegung wurden das Fertigteil 8 und das Restgitter 9 gemeinschaftlich über einen Werkstücktisch 10 der Werkzeugmaschine 1 bewegt, der an seiner Oberseite in herkömmlicher Weise mit Borsten zur Lagerung des Blechs 4 bzw. des Fertigteils 8 und des Restgitters 9 besetzt ist. Auf einem bearbeitungsseitigen Teil 11 des Werkstücktischs 10 war das Blech 4 während seiner trennenden Bearbeitung gelagert. In Figur 5 sind das Fertigteil 8 und das Restgitter 9 nach rechts auf einen entladeseitigen Teil 12 des Werkstücktischs 10 verschoben.

Der entladeseitige Teil 12 des Werkstücktischs 10 ist Teil der Entladestation 3.

Dort ist unterhalb des entladeseitigen Teils 12 des Werkstücktischs 10 eine erste Werkstücklagerung 13 mit Lagerungseinheiten in Form von Shuttles 14, 15, 16 vorgesehen. In Richtung eines Doppelpfeils 17 sind die Shuttles 14, 15, 16 bewegbar und relativ zueinander zustellbar. Ein zu diesem Zweck vorgesehener Zustellantrieb in Form eines ersten Shuttleantriebs 18 ist in Figur 5 stark schematisch angedeutet. Bei ihren Bewegungen sind die Shuttles 14, 15, 16 an einem als Führungsvorrichtung dienenden unteren Träger 19 eines Gestells 20 der Entladestation 3 geführt.

Jedes der Shuttles 14, 15, 16 ist an seiner Oberseite mit einem Stiftfeld 21 versehen. Die Stiftfelder 21 umfassen jeweils eine Mehrzahl von Aushebestiften 22, die einzeln angesteuert und auf diese Art und Weise in vertikaler Richtung angehoben und abgesenkt werden können. Bei Hubbewegungen durchsetzen die Aushebestifte 22 zu diesem Zweck vorgesehene Durchtrittsöffnungen an dem entladeseitigen Teil 12 des Werkstücktischs 10.

Oberhalb des entladeseitigen Teils 12 des Werkstücktischs 10 weist die Entladestation 3 eine zweite Werkstücklagerung 23 mit Lagerungseinheiten in Form von Shuttles 24, 25, 26 auf. In Richtung eines Doppelpfeils 27 sind die Shuttles 24, 25, 26 der zweiten Werkstücklagerung 23 mittels eines als Zustellantrieb vorgesehenen zweiten Shuttleantriebs 28 bewegbar und relativ zueinander positionierbar. Bei ihren Bewegungen in Richtung des Doppelpfeils 27 sind die Shuttles 24, 25, 26 an einem als Führungsvorrichtung dienenden oberen Träger 29 des Gestells 20 der Entladestation 3 geführt.

Jedes der Shuttles 24, 25, 26 der zweiten Werkstücklagerungen 23 weist an seiner Unterseite eine in vertikaler Richtung heb- und senkbare Saugerplatte 30 auf. Die Saugerplatten 30 sind jeweils mit einer Mehrzahl von Vakuumsaugern herkömmlicher Bauart versehen.

Zur Steuerung sämtlicher Funktionen der Werkzeugmaschine 1 dient eine Steuerungsvorrichtung in Form einer in Figur 5 andeutungsweise dargestellten numerischen Maschinensteuerung 31. Auf der numerischen Maschinensteuerung 31 läuft ein numerisches Steuerungsprogramm ab, das alle Steuerbefehle für die zu steuernden Funktionseinheiten der Werkzeugmaschine 1 umfasst.

Gemeinsam werden die erste Werkstücklagerung 13 mit den Shuttles 14, 15, 16 und die zweite Werkstücklagerung 23 mit den Shuttles 24, 25, 26 zum Werkstückhandling verwendet.

Unterhalb des entladeseitigen Teils 12 des Werkstücktischs 10 verfahren zu diesem Zweck die Shuttles 14, 15, 16 in Richtung des Doppelpfeils 17 in Positionen, die mittels der numerischen Maschinensteuerung 31 für jedes der Shuttles definiert worden sind. Entsprechend werden oberhalb des entladeseitigen Teils 12 des Werkstücktischs 10 die Shuttles 24, 25, 26 in Positionen zugestellt, die gleichfalls von der numerischen Maschinensteuerung 31 vorgegeben werden.

In dem Beispielsfall gemäß Figur 5 sind die Positionen der Shuttles 14, 15, 16 unterhalb des entladeseitigen Teils 12 des Werkstücktischs 10 und die Positionen der Shuttles 24, 25, 26 oberhalb des entladeseitigen Teils 12 des Werkstücktischs 10 derart definiert, dass die Shuttles 14, 15 einerseits und die Shuttles 24, 25 andererseits einander an dem Fertigteil 8 und das Shuttle 16 einerseits sowie das Shuttle 26 andererseits einander an dem Restgitter 9 gegenüberliegen.

Ausgehend von den Verhältnissen gemäß Figur 5 werden die Aushebestifte 22 der Stiftfelder 21 an den Shuttles 14, 15 nach oben bewegt, so dass die freien Enden der Aushebestifte 22 durch die betreffenden Öffnungen in dem entladeseitigen Teil 12 des Werkstücktischs 10 hindurch die Unterseite des Fertigteils 8 druckbeaufschlagen und dadurch das Fertigteil 8 gegen die Unterseite der Saugerplatten 30 an den Shuttles 24, 25 pressen. Durch synchrones Anheben der Aushebestifte 22 an den Shuttles 14, 15 einerseits und der Saugerplatten 30 an den Shuttles 24, 25 andererseits wird das zwischen den betreffenden Aushebestiften 22 und den betreffenden Saugerplatten 30 geklemmte Fertigteil 8 verkantungsfrei aus dem Restgitter 9 ausgehoben.

Die Saugerplatte 30 an dem Shuttle 26 dient bei dem Ausheben des Fertigteils 8 als Niederhalter für das Restgitter 9 und verhindert auf diese Art und Weise, dass das Restgitter 9 die Hubbewegung des Fertigteils 8 mitvollzieht und dadurch die Trennung des Fertigteils 8 von dem Restgitter 9 behindert.

Neben dem in Figur 5 veranschaulichten Beispiel sind Anwendungsfälle denkbar, in denen die gegenseitige Position der Shuttles 14, 15, 16 der ersten Werkstücklagerung 13 und auch die gegenseitige Position der Shuttles 24, 25, 26 der zweiten Werkstücklagerung 23 abweichend von den Verhältnissen gemäß Figur 5 zu definieren sind und in denen folglich sowohl die Shuttles 14, 15, 16 an der Unterseite des entladeseitigen Teils 12 des Werkstücktischs 10 als auch die Shuttles 24, 25, 26 an der Oberseite des entladeseitigen Teils 12 des Werkstücktischs 10 in Richtung der Doppelpfeile 17, 27 Positionen einnehmen müssen, die von den Positionen gemäß Figur 5 abweichen.

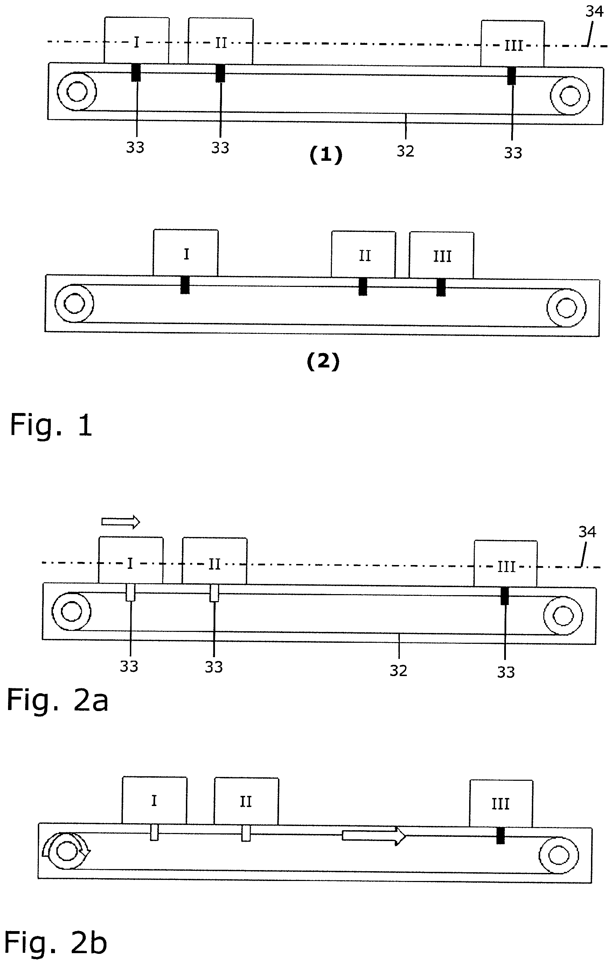

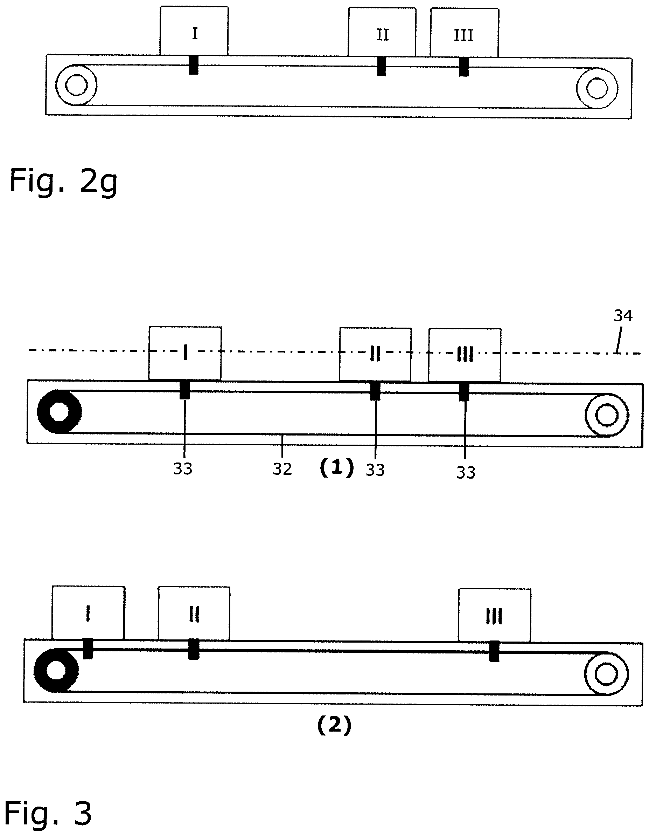

Die Abläufe zur Neupositionierung dreier Shuttles von Werkstücklagerungen der in Figur 5 dargestellten Art werden anhand der Figuren 1 bis 2g und anhand der Figuren 3 bis 4h erläutert.

Lagerungseinheiten I, II, III in den Figuren 1 bis 2g und 3 bis 4h stellen sowohl die Shuttles 14, 15, 16 der ersten Werkstücklagerung 13 als auch die Shuttles 24, 25, 26 der zweiten Werkstücklagerung 23 gemäß Figur 5 dar.

In Figur 1 sind eine erste gegenseitige Ausgangs- oder Ist-Position der Lagerungseinheiten I, II, III (Teildarstellung (1) von Figur 1) und eine erste gegenseitige Ziel- oder Soll-Position (Teildarstellung (2) von Figur 1) der Lagerungseinheiten I, II, III einander gegenübergestellt.

Zur Überführung der Lagerungseinheiten I, II, III aus der gegenseitigen Ausgangsposition in die gegenseitige Zielposition dient ein Zustellantrieb, wie er an der Werkzeugmaschine 1 gemäß Figur 5 als erster Shuttleantrieb 18 oder als zweiter Shuttleantrieb 28 vorgesehen ist. Der Zustellantrieb weist ein gemeinsames Antriebsmittel, in dem dargestellten Beispielsfall einen gemeinsamen Antriebsriemen 32 auf, der in Figur 5 nicht zu erkennen ist. Der gemeinsame Antriebsriemen 32 ist als endlos umlaufendes Antriebsmittel ausgebildet und kann mit Hilfe eines numerisch gesteuerten elektrischen Antriebsmotors in einander entgegengesetzten Bewegungsrichtungen angetrieben werden. Die numerische Steuerung des Zustellantriebs der Werkstücklagerung gemäß den Figuren 1 bis 4h übernimmt eine numerische Maschinensteuerung 31 der in Figur 5 gezeigten Art.

Für jede der Lagerungseinheiten I, II, III ist eine Kopplungsvorrichtung 33 vorgesehen, mittels derer jede Lagerungseinheit I, II, III wahlweise an den gemeinsamen Antriebsriemen 32 oder an eine gemeinsame Führungsvorrichtung angebunden werden kann. Bei der gemeinsamen Führungsvorrichtung kann es sich um den unteren Träger 19 oder den oberen Träger 29 des Gestells 20 der in Figur 5 dargestellten Entladestation 3 handeln.

Mit der Anbindung einer Lagerungseinheit I, II, III an den gemeinsamen Antriebsriemen 32 geht eine Entkopplung dieser Lagerungseinheit I, II, III von der gemeinsamen Führungsvorrichtung einher und umgekehrt. In einem Zustand, in welchem die betreffende Lagerungseinheit I, II, III an die gemeinsame Führungsvorrichtung angebunden und dementsprechend von dem gemeinsamen Antriebsriemen 32 entkoppelt ist, sind die Kopplungsvorrichtungen 33 in den Figuren 1 bis 2g und 3 bis 4h als ausgefüllte Rechtecke dargestellt. Nur mit Umrisslinien dargestellte Rechtecke symbolisieren die Kopplungsvorrichtungen 33 in einem Funktionszustand, in welchem die Lagerungseinheiten I, II, III an den gemeinsamen Antriebsriemen 32 angebunden und dementsprechend von der gemeinsamen Führungsvorrichtung entkoppelt sind. Bei den Kopplungsvorrichtungen 33 kann es sich um Klemmvorrichtungen herkömmlicher Bauweise handeln, die beispielsweise mittels pneumatischer Zylinder betätigt werden.

Zur Erledigung einer Bearbeitungsaufgabe der zu Figur 5 beschriebenen Art können die Lagerungseinheiten I, II, III bei entsprechender Geometrie und entsprechender gegenseitiger Anordnung des erzeugten Fertigteils und des erzeugten Restgitters in der gegenseitigen Ausgangsposition gemäß Teildarstellung (1) von Figur 1 angeordnet sein. Unmittelbar nach der Erledigung der Bearbeitungsaufgabe befinden sich die Lagerungseinheiten I, II, III folglich in den in Teildarstellung (1) von Figur 1 gezeigten individuellen Ist-Positionen.

Erfordert eine anschließende Bearbeitungsaufgabe eine gegenseitige Position, wie sie in Teildarstellung (2) von Figur 1 dargestellt ist, so sind die Lagerungseinheiten I, II, III aus den individuellen Ist-Positionen gemäß Teildarstellung (1) von Figur 1 in die individuellen Soll-Positionen gemäß Teildarstellung (2) von Figur 1 zu bewegen und dabei längs einer in Teildarstellung (1) von Figur 1 strichpunktiert angedeuteten gemeinsamen Zustellbahn 34 relativ zueinander zuzustellen. Jede der individuellen Soll-Positionen der Lagerungseinheiten I, II, III ist der zugeordneten individuellen Ist-Position längs der gemeinsamen Zustellbahn 34 unmittelbar benachbart.

Die Neupositionierung der Lagerungseinheiten I, II, III gemäß Figur 1 wird wie folgt durchgeführt:
In einer numerischen Steuerung (numerische Maschinensteuerung 31 gemäß Figur 5) der mit den Lagerungseinheiten I, II, III versehenen Werkstücklagerung sind die individuellen Ist-Positionen hinterlegt, welche die Lagerungseinheiten I, II, III in dem Koordinatensystem der numerischen Steuerung einnehmen. Anhand der Parameter der nachfolgenden Bearbeitungsaufgabe bestimmt die numerische Steuerung die individuellen Soll-Positionen, in welche die Lagerungseinheiten I, II, III ausgehend von den individuellen Ist-Positionen zu transferieren sind. Aus den damit vorliegenden Positionsinformationen werden in der numerischen Steuerung die Abstände, welche die individuellen Ist-Positionen der Lagerungseinheiten I, II, III längs der gemeinsamen Zustellbahn 34 von der jeweiligen individuellen Soll-Position aufweisen, ermittelt. Außerdem werden die Richtungen bestimmt, in denen die Lagerungseinheiten I, II, III längs der gemeinsamen Zustellbahn 34 zu bewegen sind, um von der jeweiligen individuellen Ist-Position in die zugeordnete individuelle Soll-Position zu gelangen.

In dem Beispielsfall gemäß den Figuren 1 bis 2g ergibt sich, dass die Lagerungseinheit I in der individuellen Ist-Position den kleinsten Abstand von der zugeordneten Soll-Position aufweist. Die Lagerungseinheit I wird daher als ausgewählte Lagerungseinheit definiert.

Die Richtung, in welcher die Lagerungseinheit I zu bewegen ist, damit sie aus der individuellen Ist-Position in die individuelle Soll-Position gelangt, wird als ausgewählte Zustellrichtung definiert. In Figur 2a ist die ausgewählte Zustellrichtung der ausgewählten Lagerungseinheit I durch einen nach rechts zeigenden Pfeil veranschaulicht.

Aus den zur Verfügung stehenden Positionsinformationen ergibt sich schließlich auch, dass in dem Beispielsfall gemäß den Figuren 1 bis 2g von den weiteren Lagerungseinheiten II, III die Lagerungseinheit II zur Überführung in die zugeordnete individuelle Soll-Position ebenfalls in der ausgewählten Zustellrichtung längs der gemeinsamen Zustellbahn 34 zuzustellen ist, während die Lagerungseinheit III zur Überführung aus der individuellen Ist-Position in die individuelle Soll-Position längs der gemeinsamen Zustellbahn 34 eine Bewegung entgegen der ausgewählten Zustellrichtung ausführen muss. Die Lagerungseinheit II wird daher als gleichläufige Lagerungseinheit, die Lagerungseinheit III als gegenläufige Lagerungseinheit definiert.

In der gegenseitigen Ausgangsposition gemäß Teildarstellung (1) von Figur 1 sind sämtliche Lagerungseinheiten I, II, III an die gemeinsame Führungsvorrichtung angebunden und dementsprechend von dem gemeinsamen Antriebsriemen 32 entkoppelt.

Nach der Definition der Lagerungseinheit I als ausgewählte Lagerungseinheit und der Lagerungseinheit II als gleichläufige Lagerungseinheit und nach der Definition der ausgewählten Zustellrichtung werden die ausgewählte Lagerungseinheit I und die gleichläufige Lagerungseinheit II von der gemeinsamen Führungsvorrichtung entkoppelt und zusammen an den gemeinsamen Antriebsriemen 32 angebunden. Die gegenläufige Lagerungseinheit III bleibt an die gemeinsame Führungsvorrichtung angebunden und ist folglich weiterhin von dem gemeinsamen Antriebsriemen 32 entkoppelt (Figur 2a).

Nun werden die ausgewählte Lagerungseinheit I und die gleichläufige weitere Lagerungseinheit II in der ausgewählten Zustellrichtung bewegt, bis die ausgewählte Lagerungseinheit I die zugeordnete individuelle Soll-Position erreicht hat.

Der Zustellantrieb einschließlich des gemeinsamen Antriebsriemens 32 wird stillgesetzt. Mit der individuellen Soll-Position der ausgewählten Lagerungseinheit I ist eine individuelle Zwischenposition der gleichläufigen Lagerungseinheit II verbunden (Figur 2b).

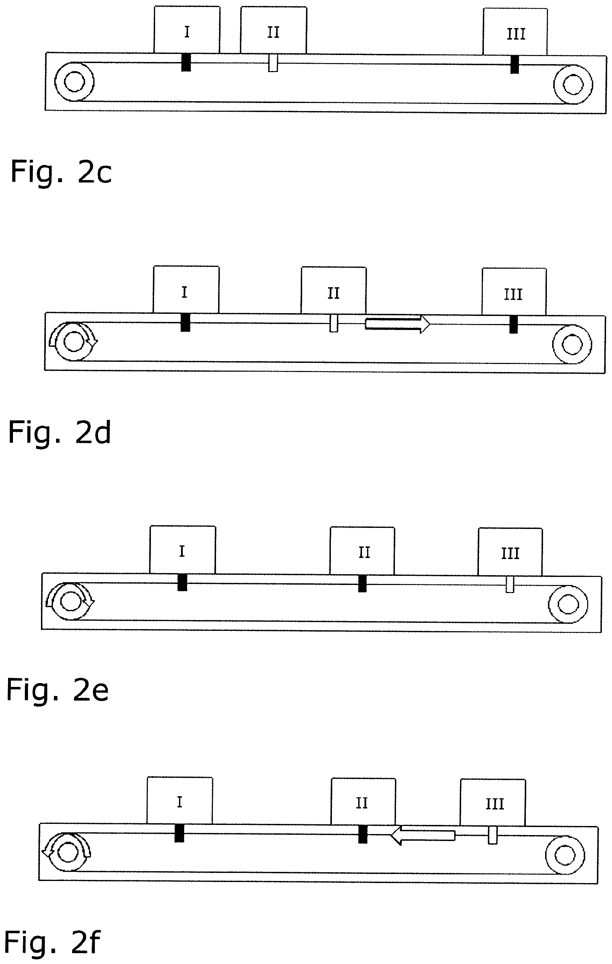

Die in die individuelle Soll-Position überführte ausgewählte Lagerungseinheit I wird nun von dem gemeinsamen Antriebsriemen 32 entkoppelt und gleichzeitig an die gemeinsame Führungsvorrichtung angebunden. Die gleichläufige Lagerungseinheit II bleibt an den gemeinsamen Antriebsriemen 32 angebunden. Die gegenläufige Lagerungseinheit III ist weiterhin an die gemeinsame Führungsvorrichtung angebunden und von dem gemeinsamen Antriebsriemen 32 entkoppelt (Figur 2c).

Mittels des motorisch angetriebenen gemeinsamen Antriebsriemens 32 wird nun die gleichläufige Lagerungseinheit II in der ausgewählten Zustellrichtung weiterbewegt (Figur 2d). Dadurch gelangt die gleichläufige Lagerungseinheit II längs der gemeinsamen Zustellbahn 34 aus der individuellen Zwischenposition gemäß Figur 2c in die individuelle Soll-Position. Hat die gleichläufige Lagerungseinheit II die individuelle Soll-Position erreicht, so wird sie von dem gemeinsamen Antriebsriemen 32 entkoppelt und an die gemeinsame Führungsvorrichtung angebunden. Gleichzeitig wird die gegenläufige Lagerungseinheit III von der gemeinsamen Führungsvorrichtung entkoppelt und an den gemeinsamen Antriebsriemen 32 angebunden (Figur 2e).

Bei in den individuellen Soll-Positionen von dem gemeinsamen Antriebsriemen 32 entkoppelten und an die gemeinsame Führungsvorrichtung angebundenen Lagerungseinheiten I, II wird die an den gemeinsamen Antriebsriemen 32 angebundene gegenläufige Lagerungseinheit III entgegen der ausgewählten Zustellrichtung längs der gemeinsamen Zustellbahn 34 bewegt (Figur 2f) und dadurch in die zugeordnete individuelle Soll-Position überführt.

Hat die gegenläufige Lagerungseinheit III die individuelle Soll-Position erreicht, so wird sie von dem gemeinsamen Antriebsriemen 32 entkoppelt und an die gemeinsame Führungsvorrichtung angebunden.

Sämtliche Lagerungseinheiten I, II, III sind nun aus der individuellen Ist-Position in die individuelle Soll-Position überführt. Die sich damit ausweislich Figur 2g ergebenden Verhältnisse stimmen mit den Verhältnissen gemäß Teildarstellung (2) von Figur 1 überein.
Abweichungen von den vorstehenden Abläufen ergeben sich in dem in den Figuren 3 bis 4h veranschaulichten Beispielsfall.

Bei bekannter gegenseitiger Ausgangsposition der Lagerungseinheiten I, II, III (Teildarstellung (1) von Figur 3) und bei bekannter gegenseitiger Zielposition (Teildarstellung (2) von Figur 3) werden in einer numerischen Steuerung wiederum die Abstände, welche die individuellen Ist-Positionen der Lagerungseinheiten I, II, III längs der gemeinsamen Zustellbahn 34 von der jeweiligen individuellen Soll-Position aufweisen sowie die Richtungen bestimmt, in denen die Lagerungseinheiten I, II, III zur Überführung aus den individuellen Ist-Positionen in die individuellen Soll-Positionen zuzustellen sind. Dabei wird festgestellt, dass die in der individuellen Ist-Position angeordnete Lagerungseinheit III ihrer individuellen Soll-Position längs der gemeinsamen Zustellbahn 34 am nächsten liegt. Folglich wird die Lagerungseinheit III als ausgewählte Lagerungseinheit definiert.

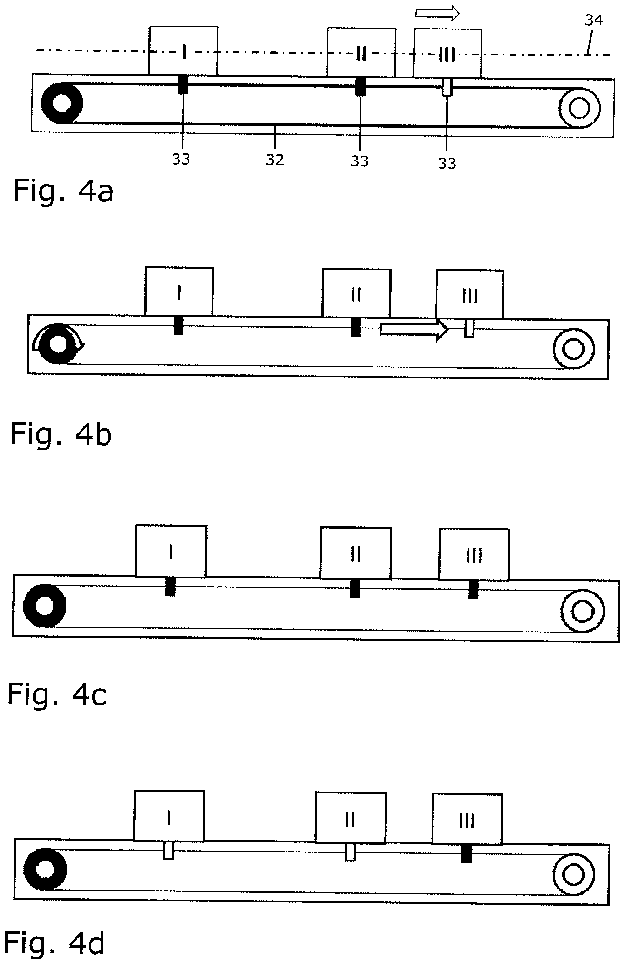

Die Richtung, in welcher die Lagerungseinheit III zu bewegen ist, damit sie aus der individuellen Ist-Position in die individuelle Soll-Position gelangt, wird als ausgewählte Zustellrichtung definiert. In Figur 4a ist die ausgewählte Zustellrichtung durch einen nach rechts zeigenden Pfeil veranschaulicht.

Aus den zur Verfügung stehenden Positionsinformationen ergibt sich auch, dass in dem Beispielsfall gemäß den Figuren 3 bis 4h keine der weiteren Lagerungseinheiten I, II zur Überführung in die zugeordnete individuelle Soll-Position ebenfalls in der ausgewählten Zustellrichtung längs der gemeinsamen Zustellbahn 34 zuzustellen ist. Es liegt folglich keine gleichläufige Lagerungseinheit vor.

Sowohl die Lagerungseinheit I als auch die Lagerungseinheit II müssen zur Überführung aus der individuellen Ist-Position in die individuelle Soll-Position längs der gemeinsamen Zustellbahn 34 eine Bewegung entgegen der ausgewählten Zustellrichtung ausführen. Die Lagerungseinheiten I, II werden daher beide als gegenläufige Lagerungseinheiten definiert.

Nach der Definition der ausgewählten Lagerungseinheit, der gegenläufigen Lagerungseinheiten und der ausgewählten Zustellrichtung wird die ausgewählte Lagerungseinheit III von der gemeinsamen Führungsvorrichtung entkoppelt, gleichzeitig an den gemeinsamen Antriebsriemen 32 angebunden und dann mittels des gemeinsamen Antriebsriemens 32 längs der gemeinsamen Zustellbahn 34 in der ausgewählten Zustellrichtung aus der individuellen Ist-Position in die individuelle Soll-Position überführt. Die gegenläufigen Lagerungseinheiten I, II bleiben bei der Zustellbewegung der ausgewählten Lagerungseinheit III von dem gemeinsamen Antriebsriemen 32 entkoppelt und in ihren individuellen Ist-Positionen an die gemeinsame Führungsvorrichtung angebunden (Figur 4b).

Hat die ausgewählte Lagerungseinheit III aufgrund Ihrer Bewegung in der ausgewählten Zustellrichtung die zugeordnete individuelle Soll-Position erreicht, so wird sie von dem gemeinsamen Antriebsriemen 32 entkoppelt und an die gemeinsame Führungsvorrichtung angebunden (Figur 4c).

Über die gegenläufigen Lagerungseinheiten I, II ist bekannt, dass die in der individuellen Ist-Position angeordnete Lagerungseinheit I längs der gemeinsamen Zustellbahn 34 näher an der zugeordneten individuellen Soll-Position liegt als die in der individuellen Ist-Position befindliche Lagerungseinheit II. Infolgedessen wird von den Lagerungseinheiten I, II die Lagerungseinheit I als ausgewählte gegenläufige Lagerungseinheit definiert.

Beide gegenläufige Lagerungseinheiten I, II werden von der gemeinsamen Führungsvorrichtung entkoppelt und an den gemeinsamen Antriebsriemen 32 angebunden. Die in die individuelle Soll-Position zugestellte ausgewählte Lagerungseinheit III bleibt von dem gemeinsamen Antriebsriemen 32 entkoppelt und an die gemeinsame Führungsvorrichtung angebunden (Figur 4d).

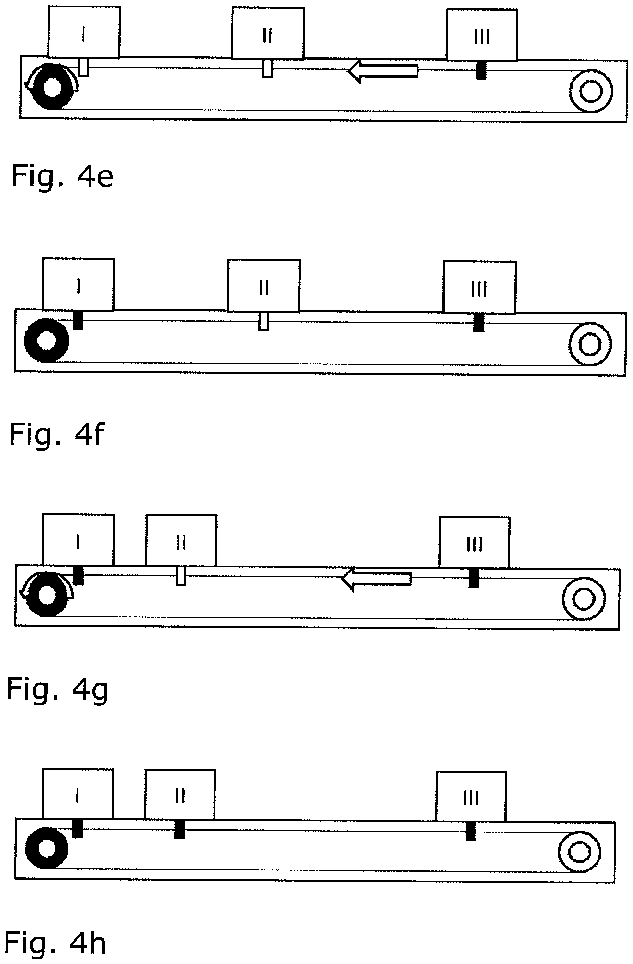

Nun werden die ausgewählte Lagerungseinheit I und die weitere gegenläufige Lagerungseinheit II entgegen der ausgewählten Zustellrichtung gemeinschaftlich zugestellt, bis die ausgewählte gegenseitige Lagerungseinheit I die individuelle Soll-Position erreicht hat. Die weitere gegenläufige Lagerungseinheit II befindet sich nun in einer individuellen Zwischenposition (Figur 4e).

Die in der individuellen Soll-Position angeordnete Lagerungseinheit I wird von dem gemeinsamen Antriebsriemen 32 entkoppelt und an die gemeinsame Führungsvorrichtung angebunden. Die weitere gegenläufige Lagerungseinheit II bleibt an den gemeinsamen Antriebsriemen 32 angebunden und von der gemeinsamen Führungsvorrichtung entkoppelt (Figur 4f).

Durch Bewegung des gemeinsamen Antriebsriemens 32 entgegen der ausgewählten Zustellrichtung wird die weitere gegenläufige Lagerungseinheit II aus ihrer individuellen Zwischenposition, in die individuelle Soll-Position bewegt (Figur 4g).

Abschließend wird auch die in die individuelle Soll-Position überführte Lagerungseinheit II von dem gemeinsamen Antriebsriemen 32 entkoppelt und an die gemeinsame Führungsvorrichtung angebunden.

Es ergeben sich damit die mit den Verhältnissen gemäß Teildarstellung (2) von Figur 3 übereinstimmenden Verhältnisse gemäß Figur 4h. Sämtliche Lagerungseinheiten I, II, III sind aus der individuellen Ist-Position in die individuelle Soll-Position zugestellt.

## Patentansprüche

1. Verfahren zum gegenseitigen Positionieren von Lagerungseinheiten (I, II, III) einer Werkstücklagerung (13, 23) an einer Werkzeugmaschine (1) zum Bearbeiten insbesondere plattenartiger Werkstücke (4), wobei die Lagerungseinheiten (I, II, III) ausgehend von einer gegenseitigen Ist-Position, bei welcher jede der Lagerungseinheiten (I, II, III) längs einer gemeinsamen Zustellbahn (34) in einer individuellen Ist-Position angeordnet ist, in eine gegenseitige Soll-Position zugestellt werden, indem die folgenden Verfahrensschritte ausgeführt werden:
(a) für die Lagerungseinheiten (I, II, III) wird jeweils eine der gegenseitigen Soll-Position der Lagerungseinheiten (I, II, III) zugeordnete und der individuellen Ist-Position derselben Lagerungseinheit (I, II, III) längs der gemeinsamen Zustellbahn (34) unmittelbar benachbarte individuelle Soll-Position längs der gemeinsamen Zustellbahn (34) bestimmt,
(b) es werden die Abstände, welche die in den individuellen Ist-Positionen angeordneten Lagerungseinheiten (I, II, III) längs der gemeinsamen Zustellbahn (34) von der jeweiligen individuellen Soll-Position aufweisen, bestimmt,
(c) diejenige Lagerungseinheit (I, II, III) die in der individuellen Ist-Position längs der gemeinsamen Zustellbahn (34) den kleinsten Abstand von ihrer individuellen Soll-Position aufweist, wird als ausgewählte Lagerungseinheit (I, II, III) definiert,
(d) die ausgewählte Lagerungseinheit (I, II, III) wird, angebunden an ein gemeinsames Antriebsmittel (32), längs der gemeinsamen Zustellbahn (34) in einer Zustellrichtung bewegt und dadurch aus der individuellen Ist-Position in die individuelle Soll-Position zugestellt,
(e) die in die individuelle Sollposition zugestellte ausgewählte Lagerungseinheit (I, II, III) wird von dem gemeinsamen Antriebsmittel (32) entkoppelt,
(f) zusätzlich zu der ausgewählten Lagerungseinheit (I, II, III) vorhandene weitere Lagerungseinheiten (I, II, III) werden gemeinschaftlich mit der ausgewählten Lagerungseinheit (I, II, III), angebunden an das gemeinsame Antriebsmittel (32), in der Zustellrichtung zugestellt, bis die ausgewählte Lagerungseinheit (I, II, III) in der individuellen Soll-Position angeordnet ist und damit verbunden die weiteren Lagerungseinheiten (I, II, III) in einer individuellen Zwischenposition angeordnet sind,
(g) diejenige der weiteren Lagerungseinheiten (I, II, III) wird als nächste ausgewählte Lagerungseinheit (I, II, III) definiert, die in der individuellen Zwischenposition den kleinsten Abstand von ihrer individuellen Soll-Position aufweist,
(h) die nächste ausgewählte Lagerungseinheit (I, II, III) wird, angebunden an das gemeinsame Antriebsmittel (32), in der Zustellrichtung bewegt und dadurch aus der individuellen Zwischenposition in die individuelle Soll-Position zugestellt, sobald die ausgewählte Lagerungseinheit (I, II, III) in der individuellen Soll-Position angeordnet und von dem gemeinsamen Antriebsmittel (32) entkoppelt ist,
(i) die in die individuelle Sollposition zugestellte nächste ausgewählte Lagerungseinheit (I, II, III) wird von dem gemeinsamen Antriebsmittel (32) entkoppelt,
(j) zusätzlich zu der nächsten ausgewählten Lagerungseinheit (I, II, III) vorhandene weitere Lagerungseinheiten (I, II, III) werden gemeinschaftlich mit der nächsten ausgewählten Lagerungseinheit (I, II, III), angebunden an das gemeinsame Antriebsmittel (32), in der Zustellrichtung zugestellt, bis die nächste ausgewählte Lagerungseinheit (I, II, III) in der individuellen Soll-Position angeordnet ist und damit verbunden die weiteren Lagerungseinheiten (I, II, III) in einer nächsten individuellen Zwischenposition angeordnet sind,
(k) die Verfahrensschritte (g) bis (j) werden erforderlichenfalls so oft wiederholt, bis sämtliche weitere Lagerungseinheiten (I, II, III) in der Zustellrichtung in die individuelle Soll-Position zugestellt sind,
**gekennzeichnet durch folgende Verfahrensschritte:**
(1) die Zustellrichtungen, in welchen die Lagerungseinheiten (I, II, III) längs der gemeinsamen Zustellbahn (34) aus der jeweiligen individuellen Ist-Position in die jeweilige individuelle Soll-Position zuzustellen sind, werden bestimmt und die Zustellrichtung der ausgewählten Lagerungseinheit (I, II, III) wird als ausgewählte Zustellrichtung definiert,
(2) weitere Lagerungseinheiten (I, II, III), welche zum Zustellen aus der individuellen Ist-Position in die individuelle Soll-Position ebenfalls in der ausgewählten Zustellrichtung zu bewegen sind, werden gegebenenfalls als gleichläufige Lagerungseinheiten (I, II, III) definiert,
(3) weitere Lagerungseinheiten (I, II, III) welche zum Zustellen aus der individuellen Ist-Position in die individuelle Soll-Position entgegen der ausgewählten Zustellrichtung zu bewegen sind, werden gegebenenfalls als gegenläufige Lagerungseinheiten (I, II, III) definiert,
(4) die gleichläufigen Lagerungseinheiten (I, II, III) werden gemeinschaftlich mit der ausgewählten Lagerungseinheit (I, II, III), angebunden an das gemeinsame Antriebsmittel (32), in der ausgewählten Zustellrichtung zugestellt, bis die ausgewählte Lagerungseinheit (I, II, III) in der individuellen Soll-Position angeordnet ist und damit verbunden die gleichläufigen Lagerungseinheiten (I, II, III) in einer individuellen Zwischenposition angeordnet sind,
(5) diejenige der gleichläufigen Lagerungseinheiten (I, II, III), die in der individuellen Zwischenposition in der ausgewählten Zustellrichtung den kleinsten Abstand von ihrer individuellen Soll-Position aufweist, wird als ausgewählte gleichläufige Lagerungseinheit (I, II, III) definiert,
(6) die ausgewählte gleichläufige Lagerungseinheit (I, II, III) wird, angebunden an das gemeinsame Antriebsmittel (32), in der ausgewählten Zustellrichtung aus der individuellen Zwischenposition in die individuelle Soll-Position zugestellt, sobald die ausgewählte Lagerungseinheit (I, II, III) in die individuelle Soll-Position zugestellt und von dem gemeinsamen Antriebsmittel (32) entkoppelt ist,
(7) die in die individuelle Soll-Position zugestellte ausgewählte gleichläufige Lagerungseinheit (I, II, III) wird von dem gemeinsamen Antriebsmittel (32) entkoppelt,
(8) zusätzlich zu der ausgewählten gleichläufigen Lagerungseinheit (I, II, III) vorhandene weitere gleichläufige Lagerungseinheiten (I, II, III) werden gegebenenfalls gemeinschaftlich mit der ausgewählten gleichläufigen Lagerungseinheit (I, II, III), angebunden an das gemeinsame Antriebsmittel (32), in der ausgewählten Zustellrichtung zugestellt, bis die ausgewählte gleichläufige Lagerungseinheit (I, II, III) in der individuellen Soll-Position angeordnet ist und damit verbunden die weiteren gleichläufigen Lagerungseinheiten (I, II, III) in einer nächsten individuellen Zwischenposition angeordnet sind,
(9) die Verfahrensschritte (5) bis (8) werden erforderlichenfalls so oft wiederholt, bis sämtliche weitere gleichläufige Lagerungseinheiten (I, II, III) in der ausgewählten Zustellrichtung in die individuelle Soll-Position zugestellt sind,
(10) die gegenläufigen Lagerungseinheiten (I, II, III) werden, von dem gemeinsamen Antriebsmittel (32) entkoppelt, in der individuellen Ist-Position belassen, bis die ausgewählte Lagerungseinheit (I, II, III) und gegebenenfalls die gleichläufigen Lagerungseinheiten (I, II, III) in die Sollposition zugestellt und von dem gemeinsamen Antriebsmittel (32) entkoppelt sind,
(11) diejenige der gegenläufigen Lagerungseinheiten (I, II, III), die in der individuellen Ist-Position entgegen der ausgewählten Zustellrichtung den kleinsten Abstand von ihrer individuellen Soll-Position aufweist, wird als ausgewählte gegenläufige Lagerungseinheit (I, II, III) definiert,
(12) die ausgewählte gegenläufige Lagerungseinheit (I, II, III) wird, angebunden an das gemeinsame Antriebsmittel (32), entgegen der ausgewählten Zustellrichtung aus der individuellen Ist-Position in die individuelle Soll-Position zugestellt, sobald die ausgewählte Lagerungseinheit (I, II, III) und gegebenenfalls die gleichläufigen Lagerungseinheiten (I, II, III) in die individuelle Soll-Position zugestellt und von dem gemeinsamen Antriebsmittel (32) entkoppelt ist beziehungsweise sind,
(13) die in die individuelle Soll-Position zugestellte ausgewählte gegenläufige Lagerungseinheit (I, II, III) wird von dem gemeinsamen Antriebsmittel (32) entkoppelt,
(14) zusätzlich zu der ausgewählten gegenläufigen Lagerungseinheit (I, II, III) vorhandene weitere gegenläufige Lagerungseinheiten (I, II, III) werden gemeinschaftlich mit der ausgewählten gegenläufigen Lagerungseinheit (I, II, III), angebunden an das gemeinsame Antriebsmittel (32), entgegen der ausgewählten Zustellrichtung zugestellt, bis die ausgewählte gegenläufige Lagerungseinheit (I, II, III) in der individuellen Soll-Position angeordnet ist und damit verbunden die weiteren gegenläufigen Lagerungseinheiten (I, II, III) in einer individuellen Zwischenposition angeordnet sind,
(15) die Verfahrensschritte (10) bis (14) werden erforderlichenfalls so oft wiederholt, bis sämtliche weitere gegenläufige Lagerungseinheiten (I, II, III) entgegen der ausgewählten Zustellrichtung in die individuelle Soll-Position zugestellt sind.

2. Verfahren nach Anspruch 1, **dadurch gekennzeichnet, dass** die Lagerungseinheiten (I, II, III) längs der gemeinsamen Zustellbahn (34) geführt werden.

3. Verfahren nach einem der vorhergehenden Ansprüche, **dadurch gekennzeichnet, dass** die Lagerungseinheiten (I, II, III) an das gemeinsame Antriebsmittel (32) lösbar klemmend angebunden werden.

4. Verfahren nach einem der vorhergehenden Ansprüche, **dadurch gekennzeichnet, dass** die Lagerungseinheiten (I, II, III) in der individuellen Ist-Position und/oder in der individuellen Soll-Position und/oder in der individuellen Zwischenposition lösbar, vorzugsweise lösbar klemmend, arretiert werden.

5. Werkstücklagerung einer Werkzeugmaschine (1) zum Bearbeiten insbesondere plattenartiger Werkstücke (4), welche Werkstücklagerung eine Lagerfläche definiert,
• mit Lagerungseinheiten, (I, II, III)
• mit einem gesteuert betätigbaren motorischen Zustellantrieb (18, 28), mittels dessen die Lagerungseinheiten (I, II, III) parallel zu der Lagerfläche ausgehend von einer gegenseitigen Ist-Position in eine gegenseitige Soll-Position zustellbar sind, indem die Lagerungseinheiten (I, II, III) mittels des Zustellantriebs (18, 28) jeweils aus einer der gegenseitigen Ist-Position der Lagerungseinheiten (I, II, III) zugeordneten individuellen Ist-Position in eine der individuellen Ist-Position längs einer gemeinsamen Zustellbahn (34) unmittelbar benachbarte und der gegenseitigen Soll-Position der Lagerungseinheiten (I, II, III) zugeordnete individuelle Soll-Position zustellbar sind,
• mit einem für die Lagerungseinheiten (I, II, III) vorgesehenen gemeinsamen Antriebsmittel (32) des Zustellantriebs (18, 28),
• mit einer gesteuert betätigbaren Kopplungsvorrichtung (33), mittels derer die Lagerungseinheiten (I, II, III) an das gemeinsame Antriebsmittel (32) des Zustellantriebs (18, 28) anbindbar und von dem gemeinsamen Antriebsmittel (32) entkoppelbar sind sowie
• mit einer Steuerungsvorrichtung (31) zur Steuerung des Zustellantriebs (18, 28) und der Kopplungsvorrichtung (33),
• wobei mittels der Steuerungsvorrichtung (31)
(a) für die Lagerungseinheiten (I, II, III) jeweils eine der gegenseitigen Soll-Position der Lagerungseinheiten (I, II, III) zugeordnete und der individuellen Ist-Position derselben Lagerungseinheit (I, II, III) längs der gemeinsamen Zustellbahn (34) unmittelbar benachbarte individuelle Soll-Position längs der gemeinsamen Zustellbahn (34) bestimmbar ist,
(b) die Abstände, welche die in den individuellen Ist-Positionen angeordneten Lagerungseinheiten (I, II, III) längs der gemeinsamen Zustellbahn (34) von der jeweiligen individuellen Soll-Position aufweisen, bestimmbar sind,
(c) diejenige Lagerungseinheit, (I, II, III) die in der individuellen Ist-Position längs der gemeinsamen Zustellbahn (34) den kleinsten Abstand von ihrer individuellen Soll-Position aufweist, als ausgewählte Lagerungseinheit (I, II, III) definierbar ist,
(d) der Zustellantrieb (18, 28) und die Kopplungsvorrichtung (33) derart steuerbar sind, dass die ausgewählte Lagerungseinheit (I, II, III), angebunden an das gemeinsame Antriebsmittel (32), längs der gemeinsamen Zustellbahn (34) in einer Zustellrichtung bewegt und dadurch aus der individuellen Ist-Position in die individuelle Soll-Position zugestellt wird,
(e) die Kopplungsvorrichtung (33) derart steuerbar ist, dass die in die individuelle Sollposition zugestellte ausgewählte Lagerungseinheit (I, II, III) von dem gemeinsamen Antriebsmittel (32) entkoppelt wird,
(f) der Zustellantrieb (18, 28) und die Kopplungsvorrichtung (33) derart steuerbar sind, dass zusätzlich zu der ausgewählten Lagerungseinheit (I, II, III) vorhandene weitere Lagerungseinheiten (I, II, III) gemeinschaftlich mit der ausgewählten Lagerungseinheit, (I, II, III), angebunden an das gemeinsame Antriebsmittel (32), in der Zustellrichtung zugestellt werden, bis die ausgewählte Lagerungseinheit (I, II, III) in der individuellen Soll-Position angeordnet ist und damit verbunden die weiteren Lagerungseinheiten (I, II, III) in einer individuellen Zwischenposition angeordnet sind,
(g) diejenige der weiteren Lagerungseinheiten (I, II, III) als nächste ausgewählte Lagerungseinheit (I, II, III) definierbar ist, die in der individuellen Zwischenposition den kleinsten Abstand von ihrer individuellen Soll-Position aufweist,
(h) der Zustellantrieb (18, 28) und die Kopplungsvorrichtung (33) derart steuerbar sind, dass die nächste ausgewählte Lagerungseinheit, (I, II, III), angebunden an das gemeinsame Antriebsmittel (32), in der Zustellrichtung bewegt und dadurch aus der individuellen Zwischenposition in die individuelle Soll-Position zugestellt wird, sobald die ausgewählte Lagerungseinheit (I, II, III) in der individuellen Soll-Position angeordnet und von dem gemeinsamen Antriebsmittel (32) entkoppelt ist,
(i) die Kopplungsvorrichtung (33) derart steuerbar ist, dass die in die individuelle Sollposition zugestellte nächste ausgewählte Lagerungseinheit (I, II, III) von dem gemeinsamen Antriebsmittel (32) entkoppelt wird,
(j) der Zustellantrieb (18, 28) und die Kopplungsvorrichtung (33) derart steuerbar sind, dass zusätzlich zu der nächsten ausgewählten Lagerungseinheit (I, II, III) vorhandene weitere Lagerungseinheiten (I, II, III) gemeinschaftlich mit der nächsten ausgewählten Lagerungseinheit (I, II, III), angebunden an das gemeinsame Antriebsmittel (32), in der Zustellrichtung zugestellt werden, bis die nächste ausgewählte Lagerungseinheit (I, II, III) in der individuellen Soll-Position angeordnet ist und damit verbunden die weiteren Lagerungseinheiten (I, II, III) in einer nächsten individuellen Zwischenposition angeordnet sind,
(k) die Verfahrensschritte (g) bis (j) erforderlichenfalls so oft wiederholbar sind, bis sämtliche weitere Lagerungseinheiten (I, II, III) in der Zustellrichtung in die individuelle Soll-Position zugestellt sind,
**dadurch gekennzeichnet, dass** mittels der Steuerungsvorrichtung (31)
(1) die Zustellrichtungen, in welchen die Lagerungseinheiten (I, II, III) längs der gemeinsamen Zustellbahn (34) aus der jeweiligen individuellen Ist-Position in die jeweilige individuelle Soll-Position zuzustellen sind, bestimmbar sind und die Zustellrichtung der ausgewählten Lagerungseinheit (I, II, III) als ausgewählte Zustellrichtung definierbar ist,
(2) weitere Lagerungseinheiten (I, II, III), welche zum Zustellen aus der individuellen Ist-Position in die individuelle Soll-Position ebenfalls in der ausgewählten Zustellrichtung zu bewegen sind, gegebenenfalls als gleichläufige Lagerungseinheiten (I, II, III) definierbar sind,
(3) weitere Lagerungseinheiten (I, II, III), welche zum Zustellen aus der individuellen Ist-Position in die individuelle Soll-Position entgegen der ausgewählten Zustellrichtung zu bewegen sind, gegebenenfalls als gegenläufige Lagerungseinheiten (I, II, III) definierbar sind,
(4) der Zustellantrieb (18, 28) und die Kopplungsvorrichtung (33) derart steuerbar sind, dass die gleichläufigen Lagerungseinheiten (I, II, III) gemeinschaftlich mit der ausgewählten Lagerungseinheit (I, II, III), angebunden an das gemeinsame Antriebsmittel (32), in der ausgewählten Zustellrichtung zugestellt werden, bis die ausgewählte Lagerungseinheit (I, II, III) in der individuellen Soll-Position angeordnet ist und damit verbunden die gleichläufigen Lagerungseinheiten (I, II, III) in einer individuellen Zwischenposition angeordnet sind,
(5) diejenige der gleichläufigen Lagerungseinheiten (I, II, III), die in der individuellen Zwischenposition in der ausgewählten Zustellrichtung den kleinsten Abstand von ihrer individuellen Soll-Position aufweist, als ausgewählte gleichläufige Lagerungseinheit (I, II, III) definierbar ist,
(6) der Zustellantrieb (18, 28) und die Kopplungsvorrichtung (33) derart steuerbar sind, dass die ausgewählte gleichläufige Lagerungseinheit (I, II, III), angebunden an das gemeinsame Antriebsmittel (32), in der ausgewählten Zustellrichtung aus der individuellen Zwischenposition in die individuelle Soll-Position zugestellt wird, sobald die ausgewählte Lagerungseinheit (I, II, III) in die individuelle Soll-Position zugestellt und von dem gemeinsamen Antriebsmittel (32) entkoppelt ist,
(7) die Kopplungsvorrichtung (33) derart steuerbar ist, dass die in die individuelle Soll-Position zugestellte ausgewählte gleichläufige Lagerungseinheit (I, II, III) von dem gemeinsamen Antriebsmittel (32) entkoppelt wird,
(8) der Zustellantrieb (18, 28) und die Kopplungsvorrichtung (33) derart steuerbar sind, dass gegebenenfalls zusätzlich zu der ausgewählten gleichläufigen Lagerungseinheit (I, II, III) vorhandene weitere gleichläufige Lagerungseinheiten (I, II, III) gemeinschaftlich mit der ausgewählten gleichläufigen Lagerungseinheit (I, II, III), angebunden an das gemeinsame Antriebsmittel (32), in der ausgewählten Zustellrichtung zugestellt werden, bis die ausgewählte gleichläufige Lagerungseinheit (I, II, III) in der individuellen Soll-Position angeordnet ist und damit verbunden die weiteren gleichläufigen Lagerungseinheiten (I, II, III) in einer nächsten individuellen Zwischenposition angeordnet sind,
(9) die Verfahrensschritte (5) bis (8) erforderlichenfalls so oft wiederholbar sind, bis sämtliche weitere gleichläufige Lagerungseinheiten (I, II, III) in der ausgewählten Zustellrichtung in die individuelle Soll-Position zugestellt sind,
(10) die Kopplungsvorrichtung (33) derart steuerbar ist, dass die gegenläufigen Lagerungseinheiten (I, II, III), von dem gemeinsamen Antriebsmittel (32) entkoppelt, in der individuellen Ist-Position belassen werden, bis die ausgewählte Lagerungseinheit (I, II, III) und gegebenenfalls die gleichläufigen Lagerungseinheiten (I, II, III) in die Sollposition zugestellt und von dem gemeinsamen Antriebsmittel (32) entkoppelt sind,
(11) diejenige der gegenläufigen Lagerungseinheiten (I, II, III), die in der individuellen Ist-Position entgegen der ausgewählten Zustellrichtung den kleinsten Abstand von ihrer individuellen Soll-Position aufweist, als ausgewählte gegenläufige Lagerungseinheit (I, II, III) definierbar ist,
(12) der Zustellantrieb (18, 28) und die Kopplungsvorrichtung (33) derart steuerbar sind, dass die ausgewählte gegenläufige Lagerungseinheit (I, II, III), angebunden an das gemeinsame Antriebsmittel (32), entgegen der ausgewählten Zustellrichtung aus der individuellen Ist-Position in die individuelle Soll-Position zugestellt wird, sobald die ausgewählte Lagerungseinheit (I, II, III) und gegebenenfalls die gleichläufigen Lagerungseinheiten (I, II, III) in die individuelle Soll-Position zugestellt und von dem gemeinsamen Antriebsmittel (32) entkoppelt ist beziehungsweise sind,
(13) die Kopplungsvorrichtung (33) derart steuerbar ist, dass die in die individuelle Soll-Position zugestellte ausgewählte gegenläufige Lagerungseinheit (I, II, III) von dem gemeinsamen Antriebsmittel (32) entkoppelt wird,
(14) der Zustellantrieb (18, 28) und die Kopplungsvorrichtung (33) derart steuerbar sind, dass zusätzlich zu der ausgewählten gegenläufigen Lagerungseinheit (I, II, III) vorhandene weitere gegenläufige Lagerungseinheiten (I, II, III) gemeinschaftlich mit der ausgewählten gegenläufigen Lagerungseinheit (I, II, III), angebunden an das gemeinsame Antriebsmittel (32), entgegen der ausgewählten Zustellrichtung zugestellt werden, bis die ausgewählte gegenläufige Lagerungseinheit (I, II, III) in der individuellen Soll-Position angeordnet ist und damit verbunden die weiteren gegenläufigen Lagerungseinheiten (I, II, III) in einer individuellen Zwischenposition angeordnet sind,
(15) die Verfahrensschritte (10) bis (14) erforderlichenfalls so oft wiederholbar sind, bis sämtliche weitere gegenläufige Lagerungseinheiten (I, II, III)entgegen der ausgewählten Zustellrichtung in die individuelle Soll-Position zugestellt sind.

6. Werkstücklagerung nach Anspruch 5, **dadurch gekennzeichnet, dass** eine Führungsvorrichtung (19, 29) vorgesehen ist, mittels derer die Lagerungseinheiten (I, II, III) längs der gemeinsamen Zustellbahn (34) geführt werden.

7. Werkstücklagerung nach Anspruch 5 oder Anspruch 6, **dadurch gekennzeichnet, dass** die Kopplungsvorrichtung (33) für die Lagerungseinheiten (I, II, III) als Klemmvorrichtung ausgebildet ist, die gesteuert in einen klemmenden Zustand und in einen Freigabezustand schaltbar ist.

8. Werkstücklagerung nach einem der Ansprüche 5 bis 7, **dadurch gekennzeichnet, dass** die Lagerungseinheiten (I, II, III) in der individuellen Ist-Position und/oder in der individuellen Soll-Position und/oder in der individuellen Zwischenposition mittels einer Arretierungsvorrichtung lösbar arretierbar sind, die vorzugsweise als in einen klemmenden Zustand und einen Freigabezustand schaltbare Klemmvorrichtung ausgebildet ist.

9. Werkstücklagerung nach Anspruch 6 und Anspruch 8, **dadurch gekennzeichnet, dass** die Lagerungseinheiten (I, II, III) in der individuellen Ist-Position und/oder in der individuellen Soll-Position und/oder in der individuellen Zwischenposition mittels der Arretierungsvorrichtung an der Führungsvorrichtung (19, 29) lösbar arretierbar sind.

10. Werkzeugmaschine zum Bearbeiten insbesondere plattenartiger Werkstücke, **gekennzeichnet durch** eine Werkstücklagerung nach einem der Ansprüche 5 bis 9.

11. Steuerungsprogramm zum Betreiben der Werkstücklagerung nach einem der Ansprüche 5 bis 9, **gekennzeichnet durch** Steuerbefehle für den Zustellantrieb (18, 28) und die Kopplungsvorrichtung (33) der Werkstücklagerung, welche bewirken, dass das Verfahren nach einem der Ansprüche 1 bis 4 durchgeführt wird, wenn das Steuerungsprogramm auf einer numerischen Maschinensteuerung abläuft.

## Claims

1. Method for mutual positioning of bearing units (I, II, III) of a workpiece bearing (13, 23) on a machine tool (1) for processing in particular plate-like workpieces (4), wherein the bearing units (I, II, III) starting from a mutual actual position, in which each of the bearing units (I, II, III) is arranged along a common positioning path (34) in an individual actual position, are positioned in a mutual desired position by the following method steps being carried out:
(a) for the bearing units (I, II, III) in each case an individual desired position, which is associated with the mutual desired position of the bearing units (I, II, III) and which is directly adjacent to the individual actual position of the same bearing unit (I, II, III) along the common positioning path (34), is determined along the common positioning path (34),
(b) the spacings which the bearing units (I, II, III) which are arranged in the individual actual positions have along the common positioning path (34) from the respective individual desired position are determined,
(c) the bearing unit (I, II, III) which in the individual actual position has the smallest spacing along the common positioning path (34) from the individual desired position thereof is defined as the selected bearing unit (I, II, III),
(d) the selected bearing unit (I, II, III) is, in a state connected to a common drive means (32), moved along the common positioning path (34) in a positioning direction and thereby positioned from the individual actual position into the individual desired position,
(e) the selected bearing unit (I, II, III) positioned in the individual desired position is decoupled from the common drive means (32),
(f) additional bearing units (I, II, III), available in addition to the selected bearing unit (I, II, III), are positioned together with the selected bearing unit (I, II, III), in a state connected to the common drive means (32), in the positioning direction until the selected bearing unit (I, II, III) is arranged in the individual desired position and in connection therewith the additional bearing units (I, II, III) are arranged in an individual intermediate position,
(g) the one of the additional bearing units (I, II, III), which in the individual intermediate position has the smallest spacing from the individual desired position thereof, is defined as the next selected bearing unit (I, II, III),
(h) the next selected bearing unit (I, II, III) is, in a state connected to the common drive means (32), moved in the positioning direction and thereby positioned from the individual intermediate position into the individual desired position as soon as the selected bearing unit (I, II, III) has been arranged in the individual desired position and has been decoupled from the common drive means (32),
(i) the next selected bearing unit (I, II, III) which is positioned into the individual desired position is decoupled from the common drive means (32),
(j) additional bearing units (I, II, III), available in addition to the next selected bearing unit (I, II, III), are positioned together with the next selected bearing unit (I, II, III), in a state connected to the common drive means (32), in the positioning direction until the next selected bearing unit (I, II, III) is arranged in the individual desired position and in connection therewith the additional bearing units (I, II, III) are arranged in a next individual intermediate position,
(k) the method steps (g) to (j) are repeated if necessary until all the additional bearing units (I, II, III) are positioned in the positioning direction into the individual desired position,
**characterised by** the following method steps:
(1) the positioning directions, in which the bearing units (I, II, III) are intended to be positioned along the common positioning path (34) from the respective individual actual position into the respective individual desired position, are determined and the positioning direction of the selected bearing unit (I, II, III) is defined as the selected positioning direction,
(2) additional bearing units (I, II, III) which for positioning are also intended to be moved from the individual actual position into the individual desired position in the selected positioning direction are, where applicable, defined as unidirectional bearing units (I, II, III),
(3) additional bearing units (I, II, III) which for positioning are intended to be moved from the individual actual position into the individual desired position counter to the selected positioning direction are, where applicable, defined as counterdirectional bearing units (I, II, III),
(4) the unidirectional bearing units (I, II, III) are positioned, together with the selected bearing unit (I, II, III), in a state connected to the common drive means (32), in the selected positioning direction until the selected bearing unit (I, II, III) is arranged in the individual desired position and in connection therewith the unidirectional bearing units (I, II, III) are arranged in an individual intermediate position,
(5) the one of the unidirectional bearing units (I, II, III) which in the individual intermediate position in the selected positioning direction has the smallest spacing from the individual desired position thereof is defined as the selected unidirectional bearing unit (I, II, III),
(6) the selected unidirectional bearing unit (I, II, III) is, in a state connected to the common drive means (32), positioned in the selected positioning direction from the individual intermediate position into the individual desired position as soon as the selected bearing unit (I, II, III) has been positioned into the individual desired position and has been decoupled from the common drive means (32),
(7) the selected unidirectional bearing unit (I, II, III) which has been positioned into the individual desired position is decoupled from the common drive means (32),
(8) additional unidirectional bearing units (I, II, III), available in addition to the selected unidirectional bearing unit (I, II, III), are where applicable positioned together with the selected unidirectional bearing unit (I, II, III), in a state connected to the common drive means (32), in the selected positioning direction until the selected unidirectional bearing unit (I, II, III) is arranged in the individual desired position and in connection therewith the additional unidirectional bearing units (I, II, III) are arranged in a next individual intermediate position,
(9) the method steps (5) to (8) are repeated if necessary until all the additional unidirectional bearing units (I, II, III) are positioned in the selected positioning direction into the individual desired position,
(10) the counterdirectional bearing units (I, II, III) are, in a state decoupled from the common drive means (32), left in the individual actual position until the selected bearing unit (I, II, III) and where applicable the unidirectional bearing units (I, II, III) are positioned in the desired position and are decoupled from the common drive means (32),
(11) the one of the counterdirectional bearing units (I, II, III) which in the individual actual position has the smallest spacing counter to the selected positioning direction from the individual desired position thereof is defined as the selected counterdirectional bearing unit (I, II, III),
(12) the selected counterdirectional bearing unit (I, II, III) is, in a state connected to the common drive means (32), positioned counter to the selected positioning direction from the individual actual position into the individual desired position as soon as the selected bearing unit (I, II, III) and where applicable the unidirectional bearing units (I, II, III) has/have been positioned into the individual desired position and has/have been decoupled from the common drive means (32),
(13) the selected counterdirectional bearing unit (I, II, III) which has been positioned into the individual desired position is decoupled from the common drive means (32),
(14) additional counterdirectional bearing units (I, II, III), available in addition to the selected counterdirectional bearing unit (I, II, III), are positioned together with the selected additional counterdirectional bearing units (I, II, III) bearing unit (I, II, III), in a state connected to the common drive means (32), counter to the selected positioning direction until the selected additional counterdirectional bearing units (I, II, III) bearing unit (I, II, III) is arranged in the individual desired position and in connection therewith the additional additional counterdirectional bearing units (I, II, III) bearing units (I, II, III) are arranged in an individual intermediate position,
(15) the method steps (10) to (14) are repeated if necessary until all the additional counterdirectional bearing units (I, II, III) are positioned counter to the selected positioning direction into the individual desired position.

2. Method according to claim 1, **characterised in that** the bearing units (I, II, III) are guided along the common positioning path (34).

3. Method according to either of the preceding claims, **characterised in that** the bearing units (I, II, III) are connected to the common drive means (32) in a releasably clamping manner.

4. Method according to any one of the preceding claims, **characterised in that** the bearing units (I, II, III) are locked in the individual actual position and/or in the individual desired position and/or in the individual intermediate position in a releasable manner, preferably in a releasably clamping manner.

5. Workpiece bearing of a machine tool (1) for processing in particular plate-like workpieces (4), which workpiece bearing defines a bearing face,
• having bearing units (I, II, III),
• having a motorised positioning drive (18, 28) which can be actuated in a controlled manner and by means of which the bearing units (I, II, III) can be positioned parallel with the bearing face starting from a mutual actual position into a mutual desired position by the bearing units (I, II, III) being able to be positioned by means of the positioning drive (18, 28) in each case from an individual actual position which is associated with the mutual actual position of the bearing units (I, II, III) into an individual desired position which is immediately adjacent to the individual actual position along a common positioning path (34) and which is associated with the mutual desired position of the bearing units (I, II, III),
• having a common drive means (32) of the positioning drive (18, 28), which drive means (32) is provided for the bearing units (I, II, III),
• having a coupling device (33) which can be actuated in a controlled manner and by means of which the bearing units (I, II, III) can be connected to the common drive means (32) of the positioning drive (18, 28) and can be decoupled from the common drive means (32), and
• having a control device (31) for controlling the positioning drive (18, 28) and the coupling device (33),
• wherein, by means of the control device (31),
(a) for the bearing units (I, II, III) an individual desired position which is associated with the mutual desired position of the bearing units (I, II, III) and which is directly adjacent to the individual actual position of the same bearing unit (I, II, III) along the common positioning path (34) can be determined along the common positioning path (34),
(b) the spacings which the bearing units (I, II, III) which are arranged in the individual actual positions have from the respective individual desired position along the common positioning path (34) can be determined,
(c) the bearing unit (I, II, III) which in the individual actual position has the smallest spacing along the common positioning path (34) from the individual desired position thereof can be defined as the selected bearing unit (I, II, III),
(d) the positioning drive (18, 28) and the coupling device (33) can be controlled in such a manner that the selected bearing unit (I, II, III), in a state connected to the common drive means (32), is moved along the common positioning path (34) in a positioning direction and is thereby positioned from the individual actual position into the individual desired position,
(e) the coupling device (33) can be controlled in such a manner that the selected bearing unit (I, II, III) which has been positioned into the individual desired position is decoupled from the common drive means (32),
(f) the positioning drive (18, 28) and the coupling device (33) can be controlled in such a manner that, additional bearing units (I, II, III), available in addition to the selected bearing unit (I, II, III), are positioned together with the selected bearing unit (I, II, III), in a state connected to the common drive means (32), in the positioning direction until the selected bearing unit (I, II, III) is arranged in the individual desired position and in connection therewith the additional bearing units (I, II, III) are arranged in an individual intermediate position,
(g) the one of the additional bearing units (I, II, III) which in the individual intermediate position has the smallest spacing from the individual desired position thereof can be defined as the next selected bearing unit (I, II, III),
(h) the positioning drive (18, 28) and the coupling device (33) can be controlled in such a manner that the next selected bearing unit (I, II, III) is, in a state connected to the common drive means (32), moved in the positioning direction and is thereby positioned from the individual intermediate position into the individual desired position as soon as the selected bearing unit (I, II, III) has been arranged in the individual desired position and has been decoupled from the common drive means (32),
(i) the coupling device (33) can be controlled in such a manner that the next selected bearing unit (I, II, III) which is positioned into the individual desired position is decoupled from the common drive means (32),
(j) the positioning drive (18, 28) and the coupling device (33) can be controlled in such a manner that, additional bearing units (I, II, III), available in addition to the next selected bearing unit (I, II, III), are positioned together with the next selected bearing unit (I, II, III), in a state connected to the common drive means (32), in the positioning direction until the next selected bearing unit (I, II, III) is arranged in the individual desired position and in connection therewith the additional bearing units (I, II, III) are arranged in a next individual intermediate position,
(k) the method steps (g) to (j) are repeated if necessary until all the additional bearing units (I, II, III) are positioned in the positioning direction into the individual desired position,
**characterised in that**, by means of the control device (31),
(1) the positioning directions in which the bearing units (I, II, III) are intended to be positioned along the common positioning path (34) from the respective individual actual position into the respective individual desired position can be determined and the positioning direction of the selected bearing unit (I, II, III) can be defined as the selected positioning direction,
(2) additional bearing units (I, II, III) which, for positioning from the individual actual position into the individual desired position, are also intended to be moved in the selected positioning direction can where applicable be defined as unidirectional bearing units (I, II, III),
(3) additional bearing units (I, II, III) which, for positioning from the individual actual position into the individual desired position, are intended to be moved counter to the selected positioning direction can where applicable be defined as counterdirectional bearing units (I, II, III),
(4) the positioning drive (18, 28) and the coupling device (33) can be controlled in such a manner that the unidirectional bearing units (I, II, III) are positioned together with the selected bearing unit (I, II, III), in a state connected to the common drive means (32), in the selected positioning direction until the selected bearing unit (I, II, III) is arranged in the individual desired position and in connection therewith the unidirectional bearing units (I, II, III) are arranged in an individual intermediate position,
(5) the one of the unidirectional bearing units (I, II, III) which in the individual intermediate position has the smallest spacing from the individual desired position thereof in the selected positioning direction can be defined as the selected unidirectional bearing unit (I, II, III),
(6) the positioning drive (18, 28) and the coupling device (33) can be controlled in such a manner that the selected unidirectional bearing unit (I, II, III) is, in a state connected to the common drive means (32), positioned in the selected positioning direction from the individual intermediate position into the individual desired position as soon as the selected bearing unit (I, II, III) has been positioned into the individual desired position and has been decoupled from the common drive means (32),
(7) the coupling device (33) can be controlled in such a manner that the selected unidirectional bearing unit (I, II, III) which is positioned into the individual desired position is decoupled from the common drive means (32),
(8) the positioning drive (18, 28) and the coupling device (33) can be controlled in such a manner that where applicable, additional unidirectional bearing units (I, II, III), available in addition to the selected unidirectional bearing unit (I, II, III), are positioned together with the selected additional unidirectional bearing unit (I, II, III), in a state connected to the common drive means (32), in the selected positioning direction until the selected unidirectional bearing unit (I, II, III) is arranged in the individual desired position and in connection therewith the additional unidirectional bearing units (I, II, III) are arranged in a next individual intermediate position,
(9) the method steps (5) to (8) can be repeated if necessary until all the additional unidirectional bearing units (I, II, III) are positioned in the selected positioning direction into the individual desired position,
(10) the coupling device (33) can be controlled in such a manner that the counterdirectional bearing units (I, II, III) are, in a state decoupled from the common drive means (32), left in the individual actual position until the selected bearing unit (I, II, III) and where applicable the unidirectional bearing units (I, II, III) has/have been positioned into the desired position and has/have been decoupled from the common drive means (32),
(11) the one of the counterdirectional bearing units (I, II, III) which in the individual actual position has the smallest spacing counter to the selected positioning direction from the individual desired position thereof can be defined as the selected counterdirectional bearing unit (I, II, III),
(12) the positioning drive (18, 28) and the coupling device (33) can be controlled in such a manner that the selected counterdirectional bearing unit (I, II, III) is, in a state connected to the common drive means (32), moved counter to the selected positioning direction from the individual actual position into the individual desired position as soon as the selected bearing unit (I, II, III) and where applicable the unidirectional bearing units (I, II, III) has/have been positioned into the individual desired position and has/have been decoupled from the common drive means (32),
(13) the coupling device (33) can be controlled in such a manner that the selected counterdirectional bearing unit (I, II, III) which is positioned into the individual desired position is decoupled from the common drive means (32),
(14) the positioning drive (18, 28) and the coupling device (33) can be controlled in such a manner that, additional opposing bearing units (I, II, III), available in addition to the selected opposing bearing unit (I, II, III), are positioned together with the selected counterdirectional bearing unit (I, II, III), in a state connected to the common drive means (32), counter to the selected positioning direction until the selected counterdirectional bearing unit (I, II, III) is arranged in the individual desired position and in connection therewith the additional counterdirectional bearing units (I, II, III) are arranged in an individual intermediate position,
(15) the method steps (10) to (14) can be repeated if necessary until all the additional counterdirectional bearing units (I, II, III) are positioned counter to the selected positioning direction into the individual desired position.

6. Workpiece bearing according to claim 5, **characterised in that** there is provided a guiding device (19, 29) by means of which the bearing units (I, II, III) are guided along the common positioning path (34).

7. Workpiece bearing according to claim 5 or claim 6, **characterised in that** the coupling device (33) for the bearing units (I, II, III) is constructed as a clamping device which can be switched in a controlled manner into a clamping state and into a release state.

8. Workpiece bearing according to any one of claims 5 to 7, **characterised in that** the bearing units (I, II, III) can be releasably locked in the individual actual position and/or in the individual desired position and/or in the individual intermediate position by means of a locking device which is preferably constructed as a clamping device which can be switched into a clamping state and a release state.

9. Workpiece bearing according to claim 6 and claim 8, **characterised in that** the bearing units (I, II, III) can be releasably locked on the guide device (19, 29) in the individual actual position and/or in the individual desired position and/or in the individual intermediate position by means of the locking device.

10. Machine tool for processing in particular plate-like workpieces, **characterised by** a workpiece bearing according to any one of claims 5 to 9.

11. Control programme for operating the workpiece bearing according to any one of claims 5 to 9, **characterised by** control commands for the positioning drive (18, 28) and the coupling device (33) of the workpiece bearing which result in the method according to any one of claims 1 to 4 being carried out when the control programme is run on a numerical machine control.

## Revendications

1. Procédé pour positionner les unes par rapport aux autres des unités de montage (I, II, III) d'un porte-pièce (13, 23) d'une machine-outil (1) qui usine en particulier des pièces (4) en forme de plaque, dans lequel les unités de montage (I, II, III) sont amenées depuis une position relative effective, dans laquelle chacune des unités de montage (I, II, III) est disposée dans une position effective individuelle sur une piste d'amenée (34), jusque dans une position relative de consigne, en exécutant les étapes suivantes :
(a) pour chacune des unités de montage (I, II, III), on détermine sur la piste commune d'amenée (34) une position de consigne individuelle associée à la position relative de consigne de l'unité de montage (I, II, III) et directement voisine de la position effective individuelle de la même unité de montage (I, II, III) le long de la piste commune d'amenée (34),
(b) les distances entre les unités de montage (I, II, III) disposées dans les positions effectives individuelles le long de la piste commune d'amenée (34) et la position respective de consigne individuelle sont déterminées,
(c) l'unité de montage (I, II, III) qui présente dans sa position effective individuelle sur la piste commune d'amenée (34) la plus petite distance par rapport à sa position de consigne individuelle est définie comme unités de montage (I, II, III) sélectionnée,
(d) l'unité de montage (I, II, III) sélectionnée est déplacée dans une direction d'amenée le long de la piste commune d'amenée (34) en étant reliée à un moyen d'entraînement commun (32) et est ainsi amenée de sa position effective individuelle jusque dans sa position de consigne individuelle,
(e) l'unité de montage (I, II, III) sélectionnée amenée dans la position de consigne individuelle est désaccouplée du moyen d'entraînement commun (32),
(f) d' autres unités de montage (I, II, III) présentes en plus de l'unité de montage (I, II, III) sélectionnée sont déplacées dans la direction d'amenée conjointement avec l'unité de montage (I, II, III) sélectionnée en étant reliées au moyen d'entraînement commun (32) jusqu'à ce que l'unité de montage (I, II, III) sélectionnée soit disposée dans la position individuelle de consigne et qu'ainsi les autres unités de montage (I, II, III) soient disposées dans une position individuelle intermédiaire,
(g) celle des autres unités de montage (I, II, III) qui présente dans sa position intermédiaire individuelle la plus petite distance par rapport à sa position de consigne individuelle est définie comme unité de montage (I, II, III) suivante sélectionnée,
(h) l'unité de montage (I, II, III) suivante sélectionnée est déplacée dans la direction d'amenée en étant reliée au moyen d'entraînement commun (32) et est ainsi amenée de sa position intermédiaire individuelle jusque dans sa position de consigne individuelle dès que l'unité de montage (I, II, III) sélectionnée a été disposée dans sa position de consigne individuelle et a été désaccouplée du moyen d'entraînement commun (32),
(i) l'unité de montage (I, II, III) suivante sélectionnée amenée dans sa position de consigne individuelle est désaccouplée du moyen d'entraînement commun (32),
(j) d' autres unités de montage (I, II, III) présentes en plus de l'unité de montage (I, II, III) sélectionnée suivante sont déplacées dans la direction d'amenée, en étant reliée au moyen d'entraînement commun (32), conjointement avec l'unité de montage (I, II, III) sélectionnée suivante, jusqu'à ce que l'unité de montage (I, II, III) sélectionnée suivante soit disposée dans sa position de consigne individuelle et qu' ainsi les autres unités de montage (I, II, III) soient disposées dans une position intermédiaire individuelle suivante,
(k) les étapes (g) à (j) du procédé sont si nécessaire répétées jusqu'à ce que toutes les autres unités de montage (I, II, III) soient amenées dans la direction d'amenée dans leur position de consigne individuelle,
**caractérisé par** les étapes suivantes :
(1) les directions d'amenée dans lesquelles les unités de montage (I, II, III) doivent être déplacées le long de la piste commune d'amenée (34) depuis leur position effective individuelle jusque dans leur position de consigne individuelle sont déterminées et la direction d'amenée de l'unité de montage (I, II, III) sélectionnée est définie comme direction d'amenée sélectionnée,
(2) d'autres unités de montage (I, II, III) qui doivent être également déplacées dans la direction d'amenée sélectionnée pour être amenées depuis leur position effective individuelle jusque dans leur position de consigne individuelle sont éventuellement définies comme unités de montage (I, II, III) à déplacer dans un sens,
(3) d'autres unités de montage (I, II, III) qui doivent être déplacées en opposition à la direction d'amenée sélectionnée pour être amenées depuis leur position effective individuelle jusque dans leur position de consigne individuelle sont éventuellement définies comme unités de montage (I, II, III) à déplacer dans le sens opposé,
(4) les unités de montage (I, II, III) à déplacer dans un sens sont déplacées dans la direction d'amenée sélectionnée conjointement avec l'unité de montage (I, II, III) sélectionnée en étant reliées au moyen d'entraînement commun (32), jusqu'à ce que l'unité de montage (I, II, III) sélectionnée soit disposée dans sa position de consigne individuelle et qu'ainsi les unités de montage (I, II, III) à déplacer dans un sens qui lui sont reliées soient disposées dans leur position intermédiaire individuelle,
(5) celle des unités de montage (I, II, III) à déplacer dans un sens qui présente dans sa position intermédiaire individuelle la plus petite distance dans la direction d'amenée sélectionnée par rapport à sa position de consigne individuelle est définie comme unité de montage (I, II, III) sélectionnée à déplacer dans un sens,
(6) l'unité de montage (I, II, III) sélectionnée à déplacer dans un sens, en étant reliée au moyen d'entraînement commun (32), est déplacée dans la direction d'amenée sélectionnée depuis sa position intermédiaire individuelle jusque dans sa position de consigne individuelle dès que l'unité de montage (I, II, III) sélectionnée a été amenée dans sa position de consigne individuelle et a été désaccouplée du moyen d'entraînement commun (32),
(7) l'unité de montage (I, II, III) sélectionnée à déplacer dans un sens qui a été amenée dans sa position de consigne individuelle est désaccouplée du moyen d'entraînement commun (32),
(8) d' autres unités de montage (I, II, III) à déplacer dans un sens présentes en plus de l'unité de montage (I, II, III) sélectionnée à déplacer dans un sens sont, éventuellement conjointement avec l'unité de montage (I, II, III) sélectionnée à déplacer dans un sens et en étant réliée au moyen d'entraînement commun (32), déplacées dans la direction d'amenée sélectionnée jusqu'à ce que l'unité de montage (I, II, III) sélectionnée à déplacer dans un sens soit disposée dans sa position de consigne individuelle et qu'ainsi les autres unités de montage (I, II, III) à déplacer dans un sens soient disposées dans une position intermédiaire individuelle suivante,
(9) les étapes (5) à (8) du procédé sont si nécessaire répétées jusqu'à ce que toutes les autres unités de montage (I, II, III) à déplacer dans un sens ont été amenées dans leur position individuelle de consigne dans la direction d'amenée sélectionnée,
(10) les unités de montage (I, II, III) à déplacer dans le sens opposé, désaccouplées du moyen d'entraînement commun (32), sont laissées dans leur position effective individuelle jusqu'à ce que l'unité de montage (I, II, III) sélectionnée et éventuellement les unités de montage (I, II, III) à déplacer dans un sens soient amenées dans leur position de consigne et aient été désaccouplées du moyen d'entraînement commun (32),
(11) celle des unités de montage (I, II, III) à déplacer dans le sens opposé, qui présente dans sa position effective individuelle la plus petite distance dans la direction opposée à la direction d'amenée sélectionnée par rapport à sa position de consigne individuelle, est définie comme unité de montage (I, II, III) sélectionnée à déplacer dans le sens opposé,
(12) l'unité de montage (I, II, III) sélectionnée à déplacer dans le sens opposé est, en étant réliée au moyen d'entraînement commun (32), déplacée dans la direction opposée à la direction d'amenée sélectionnée depuis sa position effective individuelle jusque dans sa position de consigne individuelle dès que l'unité de montage (I, II, III) sélectionnée et éventuellement les unités de montage (I, II, III) à déplacer dans un sens ont été déplacées dans leur position de consigne individuelle et désaccouplées du moyen d'entraînement commun (32),
(13) l'unité de montage (I, II, III) sélectionnée à déplacer dans le sens opposé qui a été amenée dans sa position de consigne individuelle est désaccouplée du moyen d'entraînement commun (32),
(14) d' autres unités de montage (I, II, III) à déplacer dans le sens opposé présentes en plus de l'unité de montage (I, II, III) sélectionnée à déplacer dans le sens opposé sont, conjointement avec l'unité de montage (I, II, III) sélectionnée à déplacer dans le sens opposé, déplacées en opposition à la direction d'amenée sé-lectionnée en étant réliées au moyen d'entraînement commun (32), jusqu'à ce que l'unité de montage (I, II, III) sélectionnée à déplacer dans le sens opposé soit disposée dans sa position de consigne individuelle et qu'ainsi les autres unités de montage (I, II, III) à déplacer dans le sens opposé soient disposées dans une position intermédiaire individuelle et
(15) les étapes (10) à (14) du procédé sont si nécessaire répétées jusqu'à ce que toutes les autres unités de montage (I, II, III) à déplacer dans le sens opposé ont été amenées dans leur position de consigne individuelle en opposition à la direction d'amenée sélectionnée.

2. Procédé selon la revendication 1, **caractérisé en ce que** les unités de montage (I, II, III) sont guidées le long de la piste commune d'amenée (34).

3. Procédé selon l'une des revendications précédentes, **caractérisé en ce que** les unités de montage (I, II, III) sont reliées au moyen d'entraînement commun (32) par serrage libérable.

4. Procédé selon l'une des revendications précédentes, **caractérisé en ce que** les unités de montage (I, II, III) sont bloquées de manière libérable et de préférence par serrage libérable dans leur position effective individuelle et/ou dans leur position de consigne individuelle et/ou dans leur position intermédiaire individuelle.

5. Porte-pièce d'une machine-outil (1) pour usiner des pièces, en particulier des pièces (4) en forme de plaque, le porte-pièce définissant une surface de montage, et présentant
des unités de montage (I, II, III),
un entraînement motorisé d'amenée (18, 28) apte à être actionné de manière contrôlée et au moyen duquel les unités de montage (I, II, III) peuvent être amenées parallèlement à la surface porteur depuis une position effective relative jusque dans une position de consigne relative par le fait qu'au moyen de l'entraînement d'amenée (18, 28), chacune des unités de montage (I, II, III) peut être amenée le long d'une piste commune d'amenée (34) depuis une position effective individuelle associée à la position effective relative de l'unité de montage (I, II, III) jusque dans une position de consigne individuelle directement voisine le long d'une piste d'amenée de la position effective individuelle et associée à la position de consigne relative des unités de montage (I, II, III),
un moyen d'entraînement commun (32) de l'entraînement d'amenée (18, 28) prévu pour les unités de montage (I, II, III),
un ensemble d'accouplement (33) apte à être actionné de manière contrôlée et au moyen duquel les unités de montage (I, II, III) peuvent être reliées au moyen d'entraînement commun (32) de l'entraînement d'amenée (18, 28) et désaccouplées du moyen d'entraînement commun (32) ainsi que
un ensemble de commande (31) qui commande l'entraînement d'amenée (18, 28) et l'ensemble d'accouplement (33),
l'ensemble de commande (31) assurant que :
(a) pour chacune des unités de montage (I, II, III), une position de consigne individuelle associée à la position relative de consigne des unités de montage (I, II, III) et directement voisine le long de la piste commune d'amenée (34) de la position effective individuelle de la même unité de montage (I, II, III) peut être déterminée sur la piste commune d'amenée (34),
(b) les distances le long de la piste commune d'amenée (34) entre les unités de montage (I, II, III) disposées dans les positions effectives individuelles et la position de consigne individuelle peuvent être déterminées,
(c) l'unité de montage (I, II, III) qui présente dans sa position effective individuelle la plus petite distance le long de la piste commune d'amenée (34) par rapport à sa position de consigne individuelle peut être définie comme unité de montage (I, II, III) sélectionnée,
(d) l'entraînement d'amenée (18, 28) et l'ensemble d'accouplement (33) peuvent être commandés de telle sorte que l'unité de montage (I, II, III) sélectionnée soit déplacée dans une direction d'amenée le long de la piste commune d'amenée (34) en étant reliée au moyen d'entraînement commun (32) et est ainsi amenée de sa position effective individuelle jusque dans sa position de consigne individuelle,
(e) l'ensemble d'accouplement (33) peut être commandé de telle sorte que l'unité de montage (I, II, III) sélectionnée amenée dans la position de consigne individuelle soit désaccouplée du moyen d'entraînement commun (32),
(f) l'entraînement d'amenée (18, 28) et l'ensemble d'accouplement (33) peuvent être commandés de telle sorte que d'autres unités de montage (I, II, III) présentes en plus de l'unité de montage (I, II, III) sélectionnée soient déplacées dans la direction d'amenée conjointement avec l'unité de montage (I, II, III) sélectionnée en étant reliées au moyen d'entraînement commun (32) jusqu'à ce que l'unité de montage (I, II, III) sélectionnée soit disposée dans la position individuelle de consigne et qu'ainsi les autres unités de montage (I, II, III) soient disposées dans une position individuelle intermédiaire,
(g) celle des autres unités de montage (I, II, III) qui présente dans sa position intermédiaire individuelle la plus petite distance par rapport à sa position de consigne individuelle peut être définie comme unité de montage (I, II, III) suivante sélectionnée,
(h) l'entraînement d'amenée (18, 28) et l'ensemble d'accouplement (33) peuvent être commandés de telle sorte que l'unité de montage (I, II, III) suivante sélectionnée, en étant reliée au moyen d'entraînement commun (32), soit déplacée dans la direction d'amenée et soit ainsi amenée de sa position intermédiaire individuelle jusque dans sa position de consigne individuelle dès que l'unité de montage (I, II, III) sélectionnée a été disposée dans sa position de consigne individuelle et a été désaccouplée du moyen d'entraînement commun (32),
(i) l'ensemble d'accouplement (33) peut être commandé de telle sorte que l'unité de montage (I, II, III) suivante sélectionnée amenée dans sa position de consigne individuelle soit désaccouplée du moyen d'entraînement commun (32),
(j) l'entraînement d'amenée (18, 28) et l'ensemble d'accouplement (33) peuvent être commandés de telle sorte que d'autres unités de montage (I, II, III) présentes en plus de l'unité de montage (I, II, III) sélectionnée suivante, en étant reliées au moyen d'entraînement commun (32), soient déplacées dans la direction d'amenée conjointement avec l'unité de montage (I, II, III) sélectionnée suivante jusqu'à ce que l'unité de montage (I, II, III) sélectionnée suivante soit disposée dans sa position de consigne individuelle et qu' ainsi les autres unités de montage (I, II, III) soient disposée dans une position intermédiaire individuelle suivante,
(k) les étapes (g) à (j) du procédé sont si nécessaire répétées jusqu'à ce que toutes les autres unités de montage (I, II, III) soient amenées dans la direction d'amenée dans leur position de consigne individuelle,
**caractérisé en ce qu'** au moyen de l'ensemble de commande (31):
(1) les directions d'amenée dans lesquelles les unités de montage (I, II, III) doivent être déplacées le long de la piste commune d'amenée (34) depuis leur position effective individuelle jusque dans leur position de consigne individuelle peuvent être déterminées et la direction d'amenée de l'unité de montage (I, II, III) sélectionnée peut être définie comme direction d'amenée sélectionnée,
(2) d'autres unités de montage (I, II, III) qui doivent être également déplacées dans la direction d'amenée sélectionnée pour être amenées depuis leur position effective individuelle jusque dans leur position de consigne individuelle peuvent éventuellement être définies comme unités de montage (I, II, III) à déplacer dans un sens,
(3) d'autres unités de montage (I, II, III) qui doivent être déplacées en opposition à la direction d'amenée sélectionnée pour être amenées depuis leur position effective individuelle jusque dans leur position de consigne individuelle peuvent éventuellement être définies comme unités de montage (I, II, III) à déplacer dans le sens opposé,
(4) l'entraînement d'amenée (18, 28) et l'ensemble d'accouplement (33) peuvent être commandés de telle sorte que les unités de montage (I, II, III) à déplacer dans un sens soient déplacées dans la direction d'amenée sélectionnée conjointement avec l'unité de montage (I, II, III) sélectionnée en étant reliées au moyen d'entraînement commun (32), jusqu'à ce que l'unité de montage (I, II, III) sélectionnée soit disposée dans sa position de consigne individuelle et qu'ainsi les unités de montage (I, II, III) à déplacer dans un sens soient disposées dans une position intermédiaire individuelle,
(5) celle des unités de montage (I, II, III) à déplacer dans un sens qui présente dans sa position intermédiaire individuelle la plus petite distance dans la direction d'amenée sélectionnée par rapport à sa position de consigne individuelle peut être définie comme unité de montage (I, II, III) sélectionnée à déplacer dans un sens,
(6) l'entraînement d'amenée (18, 28) et l'ensemble d'accouplement (33) peuvent être commandés de telle sorte que l'unité de montage (I, II, III) sélectionnée à déplacer dans un sens, en étant réliée au moyen d'entraînement commun (32), soit déplacée dans la direction d'amenée sélectionnée depuis sa position intermédiaire individuelle jusque dans sa position de consigne individuelle dès que l'unité de montage (I, II, III) sélectionnée a été amenée dans sa position de consigne individuelle et a été désaccouplée du moyen d'entraînement commun (32),
(7) l'ensemble d'accouplement (33) peut être commandé de telle sorte que l'unité de montage (I, II, III) sélectionnée à déplacer dans un sens qui a été amenée dans sa position de consigne individuelle soit désaccouplée du moyen d'entraînement commun (32),
(8) l'entraînement d'amenée (18, 28) et l'ensemble d'accouplement (33) peuvent être commandés de telle sorte que d'autres unités de montage (I, II, III) à déplacer dans un sens présentes en plus de l'unité de montage (I, II, III) sélectionnée à déplacer dans un sens soient, éventuellement, déplacées dans la direction d'amenée sélectionnée conjointement avec l'unité de montage (I, II, III) sélectionnée à déplacer dans un sens et en étant réliée au moyen d'entraînement commun (32), jusqu'à ce que l'unité de montage (I, II, III) sélectionnée à déplacer dans un sens soit disposée dans sa position de consigne individuelle et qu'ainsi les autres unités de montage (I, II, III) à déplacer dans un sens soient disposées dans une position intermédiaire individuelle suivante,
(9) les étapes (5) à (8) du procédé sont si nécessaire répétées jusqu'à ce que toutes les autres unités de montage (I, II, III) à déplacer dans un sens ont été amenées dans leur position individuelle de consigne dans la direction d'amenée sélectionnée,
(10) l'ensemble d'accouplement (33) peut être commandé de telle sorte les unités de montage (I, II, III) à déplacer dans le sens opposé, désaccouplées du moyen d'entraînement commun (32), soient laissées dans leur position effective individuelle jusqu'à ce que l'unité de montage (I, II, III) sélectionnée et éventuellement les unités de montage (I, II, III) à déplacer dans un sens ont été amenées dans leur position de consigne et ont été désaccouplées du moyen d'entraînement commun (32),
(11) celle des unités de montage (I, II, III) à déplacer dans le sens opposé qui présente dans sa position effective individuelle la plus petite distance dans la direction opposée à la direction d'amenée sélectionnée par rapport à sa position de consigne individuelle peut être définie comme unité de montage (I, II, III) sélectionnée à déplacer dans le sens opposé,
(12) l'entraînement d'amenée (18, 28) et l'ensemble d'accouplement (33) peuvent être commandés de telle sorte que l'unité de montage (I, II, III) sélectionnée à déplacer dans le sens opposé, en étant réliée au moyen d'entraînement commun (32), soit déplacée dans la direction opposée à la direction d'amenée sélectionnée depuis sa position effective individuelle jusque dans sa position de consigne individuelle dès que l'unité de montage (I, II, III) sélectionnée et éventuellement les unités de montage (I, II, III) à déplacer dans un sens ont été déplacées dans leur position de consigne individuelle et désaccouplées du moyen d'entraînement commun (32),
(13) l'ensemble d'accouplement (33) peut être commandé de telle sorte l'unité de montage (I, II, III) sélectionnée à déplacer dans le sens opposé qui a été amenée dans sa position de consigne individuelle soit désaccouplée du moyen d'entraînement commun (32),
(14) l'entraînement d'amenée (18, 28) et l'ensemble d'accouplement (33) peuvent être commandés de telle sorte que d'autres unités de montage (I, II, III) à déplacer dans le sens opposé présentes en plus de l'unité de montage (I, II, III) sélectionnée à déplacer dans le sens opposé soient, en étant réliées au moyen d'entraînement commun (32), déplacées en opposition à la direction d'amenée sélectionnée conjointement avec l'unité de montage (I, II, III) sélectionnée à déplacer dans le sens opposé, jusqu'à ce que l'unité de montage (I, II, III) sélectionnée à déplacer dans le sens opposé est disposée dans sa position de consigne individuelle et qu'ainsi les autres unités de montage (I, II, III) à déplacer dans le sens opposé sont disposées dans une position intermédiaire individuelle et
(15) les étapes (10) à (14) du procédé sont si nécessaire répétées jusqu'à ce que toutes les autres unités de montage (I, II, III) à déplacer dans le sens opposé ont été amenées dans leur position de consigne individuelle en opposition à la direction d'amenée sélectionnée.

6. Porte-pièce selon la revendication 5, **caractérisé en ce qu'**il présente un ensemble de guidage (19, 29) au moyen duquel les unités de montage (I, II, III) sont guidées le long de la piste commune d'amenée (34).

7. Porte-pièce selon la revendication 5 ou la revendication 6, **caractérisé en ce que** l'ensemble d'accouplement (33) prévu pour les unités de montage (I, II, III) est configuré comme ensemble de serrage qui peut être commuté de manière contrôlée dans une position de serrage et une position de libération.

8. Porte-pièce selon l'une des revendications 5 à 7, **caractérisé en ce que** les unités de montage (I, II, III) peuvent être bloquées de manière libérable au moyen d'un ensemble de blocage dans leur position effective individuelle et/ou dans leur position de consigne individuelle et/ou dans leur position intermédiaire individuelle, l'ensemble de blocage étant de préférence configuré comme ensemble de serrage apte à être commuté dans une position de serrage et une position de libération.

9. Porte-pièce selon la revendication 6 et la revendication 8, **caractérisé en ce que** les unités de montage (I, II, III) peuvent être bloquées de manière libérable sur l'ensemble de guidage (19, 29) au moyen de l'ensemble de blocage dans leur position effective individuelle et/ou dans leur position de consigne individuelle et/ou dans leur position intermédiaire individuelle.

10. Machine-outil pour usiner des pièces, en particulier des pièces en forme de plaque, **caractérisée par** un porte-pièce selon l'une des revendications 5 à 9.

11. Programme de commande destiné à conduire le porte-pièce selon l'une des revendications 5 à 9, **caractérisé par** des ordres de commande de l'entraînement d'amenée (18, 28) et de l'ensemble d'accouplement (33) du porte-pièce qui ont pour effet la mise en oeuvre du procédé selon l'une des revendications 1 à 4 lorsque le programme de commande est exécuté sur une commande numérique de machine.
